(19) **Europäisches Patentamt / European Patent Office / Office européen des brevets**

(11) **EP 4 729 591 A1**

(12) **EUROPEAN PATENT APPLICATION**
published in accordance with Art. 153(4) EPC

(43) Date of publication:
**22.04.2026 Bulletin 2026/17**

(21) Application number: **24825513.5**

(22) Date of filing: **08.03.2024**

(51) International Patent Classification (IPC):
**C09K 5/04** $^{(2006.01)}$    **C10M 105/18** $^{(2006.01)}$
**C10M 105/38** $^{(2006.01)}$    **C10M 107/24** $^{(2006.01)}$
**C10M 107/34** $^{(2006.01)}$    **F25B 1/00** $^{(2006.01)}$

(52) Cooperative Patent Classification (CPC):
**C09K 5/04; C10M 105/18; C10M 105/38;**
**C10M 107/24; C10M 107/34; F25B 1/00**

(86) International application number:
**PCT/JP2024/009110**

(87) International publication number:
**WO 2024/262102 (26.12.2024 Gazette 2024/52)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **19.06.2023 JP 2023100364**

(71) Applicant: **AGC INC.**
**Chiyoda-ku,**
**Tokyo 1008405 (JP)**

(72) Inventor: **HAYAMIZU, Hiroki**
**Tokyo 100-8405 (JP)**

(74) Representative: **Müller-Boré & Partner**
**Patentanwälte PartG mbB**
**Friedenheimer Brücke 21**
**80639 München (DE)**

(54) **WORKING MEDIUM, COMPOSITION FOR HEAT CYCLE SYSTEMS, HEAT CYCLE SYSTEM, AND HEAT CYCLE METHOD**

(57) A working medium including HFO-1123, HFO-1234yf, and carbon dioxide, wherein X and Y satisfy the following Inequalities (A1) and (A2): (A1) $-2.20X + 25.60 \le Y \le -5.58X + 61.74$, (A2) $2.5 < X \le 6.0$, in which the content of the carbon dioxide with respect to the total content of these components is defined as X% by mass, and the content of HFO-1123 with respect thereto is defined as Y% by mass, and in which the total content of HFO-1123, HFO-1234yf and carbon dioxide is 99.0% by mass or more with respect to the total amount of the working medium; and a composition for a heat cycle system, a heat cycle system and a heat cycle method using the working medium, are provided.

EP 4 729 591 A1

**Description**

Technical Field

The present disclosure relates to a working medium, a composition for a heat cycle system, a heat cycle system, and a heat cycle method.

Background Art

Conventionally, the impacts of working media, such as working media for heat cycles including refrigerants for chilling and freezing equipment, refrigerants for air-conditioning equipment, working media for heating and hot-water supply equipment, working media for electric power generation systems (e.g., waste heat recovery power generation), working media for latent heat transport apparatuses (e.g., heat pipes) and secondary cooling media, on the stratospheric ozone layer and global warming, have been pointed out. For example, the replacement for R404A, R410A, R407C, difluoromethane (R32), and the like used in cooling systems has been considered due to their high global warming potential (GWP).

Patent Document 1 discloses a working medium for a heat cycle that contains trifluoroethylene (HFO-1123) and a first component consisting of at least one substance selected from carbon dioxide, fluoromethane, trifluoroiodomethane, methane, ethane, propane, helium, neon, argon, krypton, xenon, nitrogen, and ammonia.

Citation List

Patent Documents

Patent Document 1: WO 2016/194847

SUMMARY OF INVENTION

Technical Problem

In a case in which an azeotropic or non-azeotropic mixed medium that includes a working medium having a low GWP such as HFO-1123 is used as a working medium instead of a conventional working medium such as R404A, changes in the saturated vapor pressure and the saturated liquid pressure occur within the operating temperature range of a heat cycle system, because the boiling point of the working medium is different from that of a conventional working medium. Therefore, if the pressure range in the equipment during the operation of the heat cycle system is drastically different from that in the case in which a conventional working medium is used, it may be necessary to reconsider the pressure-resistance design of the equipment, or the cycle performance and equipment reliability may deteriorate in an operation environment that requires operation at low temperatures. Accordingly, even in the case of using an alternative working medium, it is desired that the heat cycle system can be operated within approximately the same pressure range as that in the case of using a conventional working medium.

An embodiment of the disclosure is directed to providing a working medium whose saturated vapor pressure in a low temperature environment is not too low, and whose saturated liquid pressure in a high temperature environment is not too high, as well as a composition for a heat cycle system, a heat cycle system, and a heat cycle method, each using the working medium.

Solution to Problem

The disclosure includes the following embodiments.

(1) A working medium containing trifluoroethylene, 2,3,3,3-tetrafluoropropene, and carbon dioxide,

wherein X and Y satisfy the following Inequalities (A1) and (A2):

$$-2.20X + 25.60 \leq Y \leq -5.58X + 61.74 \qquad (A1)$$

$$2.5 \leq X \leq 6.0 \qquad (A2),$$

wherein a content of the carbon dioxide with respect to a total content of the trifluoroethylene, the 2,3,3,3-tetrafluoropropene and the carbon dioxide is defined as X% by mass, and a content of the trifluoroethylene with respect to the total content of the trifluoroethylene, the 2,3,3,3-tetrafluoropropene and the carbon dioxide is defined as Y% by mass, and

wherein the total content of the trifluoroethylene, the 2,3,3,3-tetrafluoropropene and the carbon dioxide is 99.0% by mass or more with respect to a total amount of the working medium.

(2) The working medium according to (1), wherein X and Y further satisfy the following Inequality (A3):

$$-2.20X + 25.60 \leq Y \leq -5.67X + 56.20 \qquad (A3).$$

(3) The working medium according to (1) or (2), wherein X is from 3.0 to 4.0.

(4) The working medium according to any one of (1) to (3), wherein Y is from 25.0 to 40.0.

(5) The working medium according to any one of (1) to (4), wherein the working medium has a heat of combustion of 10.310 MJ/kg or less.

(6) A composition for a heat cycle system, containing:

the working medium according to any one of (1) to (5); and
a refrigerating machine oil.

(7) The composition for a heat cycle system according to (6), wherein the refrigerating machine oil contains at least one selected from a group consisting of a polyalkylene glycol oil (PAG), a polyol ester oil (POE), and a polyvinyl ether oil (PVE).

(8) A heat cycle system, including:

the working medium according to any one of (1) to (5);
a compressor configured to compress a vapor of the working medium;
a condenser configured to cool and liquefy the vapor of the working medium discharged from the compressor;
a decompressor configured to decompress the working medium discharged from the condenser; and
an evaporator configured to heat the working medium discharged from the decompressor,
wherein the evaporator controls an evaporation temperature of the working medium at -40°C or higher.

(9) The heat cycle system according to (8), wherein the evaporator controls the evaporation temperature of the working medium at -35°C or higher.

(10) The heat cycle system according to (8) or (9), wherein the evaporator controls the evaporation temperature of the working medium at -30°C or higher.

(11) A heat cycle method, including:

compressing a vapor of the working medium according to any one of (1) to (5);
cooling and liquefying the vapor of the working medium;
decompressing the liquefied working medium; and
heating the decompressed working medium at an evaporation temperature of -40°C or higher.

(12) The heat cycle method according to (11), wherein the heating of the decompressed working medium is carried out at an evaporation temperature of -35°C or higher.

(13) The heat cycle method according to (11) or (12), wherein the heating of the decompressed working medium is carried out at an evaporation temperature of -30°C or higher.

Advantageous Effects of Invention

An embodiment of the disclosure provides a working medium whose saturated vapor pressure in a low temperature environment is not too low, and whose saturated liquid pressure in a high temperature environment is not too high, as well as a composition for a heat cycle system, a heat cycle system, and a heat cycle method, each using the working medium.

BRIEF DESCRIPTION OF DRAWINGS

FIG. 1 is a schematic configuration diagram illustrating an example of a refrigeration cycle apparatus.
FIG. 2 is a cycle diagram illustrating the state change of an example of a working medium in the refrigeration cycle apparatus, on a pressure-enthalpy diagram.
FIG. 3 is a diagram illustrating the saturated liquid pressure and the saturated vapor pressure on a pressure-enthalpy diagram in an example of a single medium or an azeotropic mixed medium.
FIG. 4 is a diagram illustrating the saturated liquid pressure and the saturated vapor pressure on a pressure-enthalpy diagram in an example of a non-azeotropic mixed medium.

DESCRIPTION OF EMBODIMENTS

In the disclosure, a numerical range indicated using the expression "from ... to ..." refers to a range that includes the numerical values described before and after the term "to" as the minimum value and the maximum value, respectively.
Within the numerical ranges described stepwise in the disclosure, an upper limit value or a lower limit value described in a certain numerical range may be replaced with an upper limit value or a lower limit value of another numerical range described stepwise. Further, in the numerical ranges described in the disclosure, an upper limit value or a lower limit value described in a certain numerical range may be replaced with a value shown in the Examples.
In the disclosure, a combination of two or more preferred embodiments is a more preferred embodiment.
In the disclosure, when multiple kinds of substances that correspond to a component are present, the amount of the component refers to the total amount of the multiple kinds of substances, unless otherwise specified.
In the disclosure, the term "pressure" refers to an absolute pressure, which is 0.101 MPa at atmospheric pressure.
In the disclosure, the term "saturated vapor pressure" refers to the pressure of a saturated vapor, and indicates the pressure at the intersection of the isothermal line and the saturated vapor line on a pressure-enthalpy diagram.
In the disclosure, the term "saturated liquid pressure" refers to the pressure of a saturated liquid, and indicates the pressure at the intersection of the isothermal line and the saturated liquid line on a pressure-enthalpy diagram.

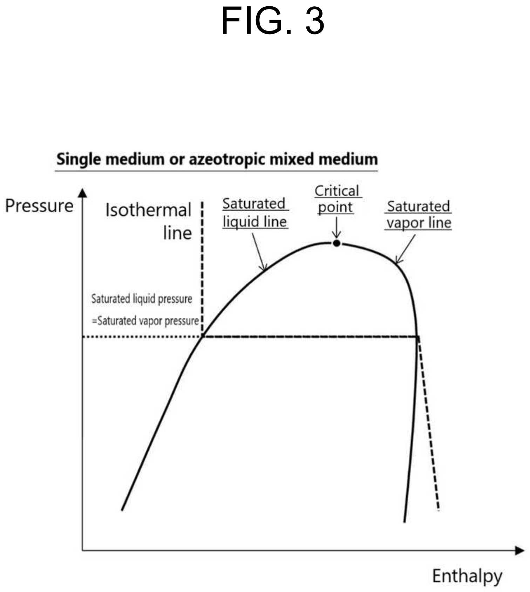

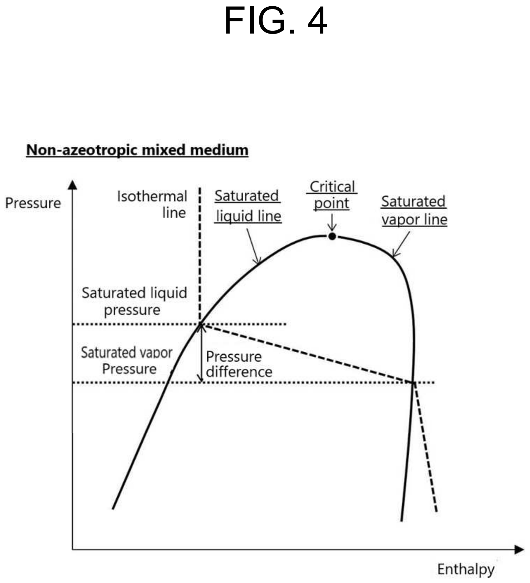

FIG. 3 is a diagram illustrating the saturated liquid pressure and the saturated vapor pressure on a pressure-enthalpy diagram in an example of a single medium or an azeotropic mixed medium, and FIG. 4 is a diagram illustrating the saturated liquid pressure and the saturated vapor pressure on a pressure-enthalpy diagram in one example of a non-azeotropic mixed medium. As shown in FIG. 3, in a case in which the working medium is a single medium or an azeotropic mixed medium, the saturated liquid pressure and the saturated vapor pressure at the same temperature indicated by the isothermal line are substantially the same. In contrast, as shown in FIG. 4, in a case in which the working medium is a non-azeotropic mixed medium, the saturated vapor pressure and the saturated liquid pressure at the same temperature indicated by the isothermal line are different from each other, and the saturated vapor pressure is lower than the saturated liquid pressure.

[Working Medium]

The working medium according to the disclosure contains trifluoroethylene (HFO-1123), 2,3,3,3-tetrafluoropropene (HFO-1234yf), and carbon dioxide,

wherein X and Y satisfy the following Inequalities (A1) and (A2):

$$-2.20X + 25.60 \leq Y \leq -5.58X + 61.74 \qquad (A1)$$

$$2.5 \leq X \leq 6.0 \qquad (A2),$$

wherein the content of carbon dioxide with respect to the total content of HFO-1123, HFO-1234yf and carbon dioxide is defined as X% by mass, and the content of HFO-1123 with respect to the total content of HFO-1123, HFO-1234yf and carbon dioxide is defined as Y% by mass, and
wherein the total content of HFO-1123, HFO-1234yf and carbon dioxide is 99.0% by mass or more with respect to the total amount of the working medium.

In the working medium according to the disclosure, the saturated vapor pressure in a low temperature environment (e.g., -40°C) is not too low, and the saturated liquid pressure in a high temperature environment (e.g., 55°C) is not too high. This makes it possible to operate a heat cycle system within approximately the same pressure range as that in the case of using a conventional working medium.

HFO-1123 has a low GWP, but is classified as slightly flammable (corresponds to 2L) in ASHRAE Standard 34, and has a relatively low boiling point, which is -61.239°C. Accordingly, the saturated vapor pressure and the saturated liquid pressure of HFO-1123 are higher than those of R404A or the like that are conventional working media. Therefore, in the case of using HFO-1123 alone, it becomes necessary to change the pressure-resistance design of the equipment in which a conventional working medium is used.

HFO-1234yf has a low GWP, but is classified as slightly flammable (corresponds to 2L) in ASHRAE Standard 34, and has a relatively high boiling point, which is -29.485°C. Accordingly, in an operating environment requiring operation at a low evaporation temperature, the low-pressure side of the equipment becomes equal to or lower than the boiling point, resulting in operation under negative pressure. This tends to decrease the suction of the working medium into a compressor and deteriorate the cycle performance and the equipment reliability.

Carbon dioxide has a low GWP, and is categorized as nonflammable (1) in ASHRAE Standard 34, but has a relatively low boiling point, which is -78.464°C. Accordingly, when a working medium containing a large amount of carbon dioxide is used, it becomes necessary to change the pressure-resistance design of the equipment in which a conventional working medium is used.

In contrast, the present inventors have found that a working medium whose saturated vapor pressure in a low temperature environment (e.g., -40°C) is not too low and whose saturated liquid pressure in a high temperature environment (e.g., 55°C) is not too high can be obtained by mixing HFO-1123, HFO-1234yf and carbon dioxide at a specific ratio, and adjusting the total content of HFO-1123, HFO-1234yf and carbon dioxide to 99.0% by mass or more with respect to the amount of the working medium. Further, since the working medium according to the disclosure contains carbon dioxide at a specific proportion, it is also possible to effectively suppress flammability. In addition, since HFO-1123, HFO-1234yf and carbon dioxide all have low GWPs, a working medium having a low GWP can be obtained by mixing these components.

The following table shows the boiling point, the GWP, flammability classification according to ASHRAE Standard 34, and the heat of combustion, of R410A, R404A and R32, which are conventional working media, and of HFO-1123, HFO-1234yf and carbon dioxide.

[Table 1]

|  | Boiling point (°C) (0.101 MPa) | GWP (AR6) | Flammability classification according to ASHRAE Standard 34 | Heat of combustion (MJ/kg) |
|---|---|---|---|---|
| R410A | -51.364 | 2256 | 1 | 6.634 |
| R404A | -45.471 | 4728 | 1 | 7.423 |
| R32 | -51.651 | 771 | 2L | 9.548 |
| HFO-1123 | -61.239 | 0.005 | Corresponds to 2L | 9.929 |
| HFO-1234yf | -29.485 | 0.501 | 2L | 10.731 |
| $CO_2$ | -78.464 | 1.000 | 1 | - |

Patent Document 1 is silent regarding a working medium that contains HFO-1123, HFO-1234yf, and carbon dioxide, in which X and Y satisfy Inequalities (A1) and (A2), and in which the total content of HFO-1123, HFO-1234yf, and carbon dioxide is 99.0% by mass or more with respect to the total amount of the working medium.

In the disclosure, the term "working medium" refers to a medium that transfers heat, and is a concept encompassing a refrigerant composition and a heating medium composition. The refrigerant composition is a medium mainly responsible for cooling a heat source, but at the same time, may also be used as a medium responsible for heating. The heating medium composition is a medium mainly responsible for heating, but at the same time, may also be used as a medium responsible for cooling a heat source.

The working medium is preferably a medium for heat cycles. Specifically, it is preferred that the working medium is used in a heat cycle system in which a series of changes occurs, such as those in which the state of the working medium changes by utilizing heat absorption and heat dissipation, and then returns to the initial state.

The working medium according to the disclosure contains HFO-1123, HFO-1234yf, and carbon dioxide. From the viewpoint of reducing the potential impact of the working medium on GWP, the content of component(s) other than HFO-1123, HFO-1234yf and carbon dioxide is preferably low. From the viewpoint described above, the total content of HFO-1123, HFO-1234yf and carbon dioxide in the working medium is 99.0% by mass or more, and is preferably 99.5% by mass or more, with respect to the total amount of the working medium. The upper limit value of the total content of HFO-1123, HFO-1234yf and carbon dioxide is not particularly limited, and may be 100% by mass.

The respective components included in the working medium will be described below in detail.

(HFO-1123 and Carbon Dioxide)

In the working medium according to the disclosure, when the content of carbon dioxide with respect to the total content of HFO-1123, HFO-1234yf and carbon dioxide is defined as X% by mass, and the content of HFO-1123 with respect to the total content of HFO-1123, HFO-1234yf and carbon dioxide is defined as Y% by mass, X and Y satisfy the following Inequalities (A1) and (A2):

$$-2.20X + 25.60 \le Y \le -5.58X + 61.74 \qquad (A1)$$

$$2.5 \le X \le 6.0 \qquad (A2).$$

When X and Y satisfy Inequalities (A1) and (A2), the saturated vapor pressure at - 40°C is approximately 0.082 MPa or greater. Therefore, deterioration in the cycle performance and equipment reliability can be suppressed even at a low temperature of -40°C. Further, when X and Y satisfy Inequalities (A1) and (A2), the saturated liquid pressure at 55°C is approximately 3.150 MPa or less. This saturated liquid pressure is equal to or less than about 1.219 times that of R404A, and it is possible to operate a heat cycle system without drastically changing the pressure-resistance design of existing equipment.

In addition, since the working medium according to the disclosure contains 2.5% by mass or more of carbon dioxide with respect to the total content of HFO-1123, HFO-1234yf and carbon dioxide, the flammability can be effectively reduced.

It is preferred that X and Y further satisfy the following Inequality (A3):

$$-2.20X + 25.60 \le Y \le -5.67X + 56.20 \qquad (A3).$$

When X and Y further satisfy Inequality (A3), the saturated liquid pressure at 55°C is approximately 3.000 MPa or less. This saturated liquid pressure is equal to or less than about 1.160 times that of R404A, and it is possible to operate a heat cycle system without drastically changing the pressure-resistance design of existing equipment.

The content (X) of carbon dioxide with respect to the total content of HFO-1123, HFO-1234yf and carbon dioxide is 2.5% by mass or more, and is preferably 3.0% by mass or more, from the viewpoint of suppressing an excessive decrease in the saturated vapor pressure, and from the viewpoint of reducing the flammability of the working medium. The content (X) is 6.0% by mass or less, and is more preferably 5.0% by mass or less, and still more preferably 4.0% by mass or less, from the viewpoint of suppressing an excessive increase in the saturated liquid pressure. From such points of view, the content (X) is from 2.5 to 6.0% by mass, preferably from 2.5 to 5.0% by mass, and more preferably from 3.0 to 4.0% by mass.

The content (Y) of HFO-1123 with respect to the total content of HFO-1123, HFO-1234yf and carbon dioxide is preferably 10.0% by mass or more, more preferably 20.0% by mass or more, and still more preferably 25.0% by mass or more, from the viewpoint of suppressing an excessive decrease in the saturated vapor pressure. The content (Y) is preferably 50.0% by mass or less, more preferably 45.0% by mass or less, and still more preferably 40.0% by mass or less, from the viewpoint of suppressing an excessive increase in the saturated liquid pressure. From such points of view, the content (Y) is preferably from 10.0 to 50.0% by mass, more preferably from 20.0 to 45.0% by mass, and still more preferably from 25.0 to 40.0% by mass.

(HFO-1234yf)

In the working medium, the content of HFO-1234yf is not particularly limited, and is adjusted as appropriate such that the contents of HFO-1123 and carbon dioxide satisfy Inequalities (A1) and (A2), and the total content of HFO-1123, HFO-1234yf and carbon dioxide is 99.0% by mass or more.

For example, the content of HFO-1234yf with respect to the total content of HFO-1123, HFO-1234yf and carbon dioxide may be 44% by mass or more, 50% by mass or more, or 56% by mass or more. Further, the content of HFO-1234yf with respect to the total content of HFO-1123, HFO-1234yf and carbon dioxide may be 87.5% by mass or less, 77.5% by mass or less, or 72% by mass or less. The content may be from 44 to 87.5% by mass, from 50 to 77.5% by mass, or from 56 to 72% by mass.

(Other Components)

The working medium may but need not contain component(s) other than HFO-1123, HFO-1234yf, and carbon dioxide. Examples of said other component(s) include a hydrofluoroolefin (HFO) other than HFO-1123 and HFO-1234yf, a hydrochlorofluoroolefin (HCFO), a hydrofluorocarbon (HFC), a chlorofluoroolefin (CFO), a halogenated compound other than the foregoing, and a hydrocarbon. Only one kind of said other component, or two or more kinds of said other components, may be contained.

Examples of the HFO include 1,1-difluoroethylene (HFO-1132a), (Z)-1,2-difluoroethylene (HFO-1132(Z)), (E)-1,2-difluoroethylene (HFO-1132(E)), 2-fluoropropene (HFO-1261yf), 1,1,2-trifluoropropene (HFO-1243yc), (Z)-1,3,3,3-tetrafluoropropene (HFO-1234ze(Z)), (E)-1,3,3,3-tetrafluoropropene (HFO-1234ze(E)), 1,2,3,3,3-pentafluoropropene (HFO-1225ye), 3,3,3-trifluoropropene (HFO-1243zf), (Z)-1,1,1,4,4,4-hexafluorobutene (HFO-1336mzz(Z)), and (E)-1,1,1,4,4,4-hexafluorobutene (HFO-1336mzz(E)).

Examples of the HCFO include (E)-1-chloro-2,3,3,3-tetrafluoropropene (HCFO-1224yd(E)), (Z)-1-chloro-2,3,3,3-tetrafluoropropene (HCFO-1224yd(Z)), 2-chloro-1,1,3,3-tetrafluoropropene (HCFO-1224xc), 2-chloro-1,3,3,3-tetrafluoropropene (HCFO-1224xe), 1-chloro-1,1-difluoroethylene (HCFO-1122), 1-chloro-1,2-difluoroethylene (HCFO-1122a), (E)-1-chloro-3,3,3-trifluoropropene (HCFO-1233zd(E)), (Z)-1-chloro-3,3,3-trifluoropropene (HCFO-1233zd(Z)), 2-chloro-1,1,3-trifluoropropene (HCFO-1233xc), and 2-chloro-3,3,3-trifluoropropene (HCFO-1233xf).

Examples of the HFC include: difluoromethane (HFC-32); fluoroethane (HFC-161); 1,1-difluoroethane (HFC-152a); 1,1,1-trifluoroethane (HFC-143a); 1,1,2,2-tetrafluoroethane (HFC-134); 1,1,1,2-tetrafluoroethane (HFC-134a); pentafluoroethane (HFC-125); a pentafluoropropane such as 1,1,1,3,3-pentafluoropropane (HFC-245fa); a hexafluoropropane such as 1,1,2,2,3,3-hexafluoropropane (HFC-236fa); a pentafluorobutane such as 1,1,1,3,3-pentafluorobutane (HFC-365mfc); and a heptafluorocyclopentane such as 1,1,2,2,3,3,4-heptafluorocyclopentane (HFC-c447ef).

Examples of the chlorofluoroolefin (CFO) include 1,1-dichloro-2,3,3,3-tetrafluoropropene (CFO-1214ya), 1,3-dichloro-1,2,3,3-tetrafluoropropene (CFO-1214yb), and 1,2-dichloro-1,2-difluoroethylene (CFO-1112).

Examples of said other halogenated compound include iodine- and bromine-containing compounds, such as monoiodomethane ($CH_3I$), diiodomethane ($CH_2I_2$), dibromomethane ($CH_2Br_2$), bromomethane ($CH_3Br$), dichloromethane ($CH_2Cl_2$), chloriodomethane ($CH_2ClI$), dibromochloromethane ($CHBr_2Cl$), tetraiodomethane ($CI_4$), carbon tetrabromide ($CBr_4$), bromotrichloromethane ($CBrCl_3$), dibromodichloromethane ($CBr_2Cl_2$), tribromofluoromethane ($CBr_3F$), fluoroiodomethane ($CHFI_2$), difluoroiodomethane ($CHF_2I$), difluorodiiodomethane ($CF_2I_2$), dibromodifluoromethane ($CBr_2F_2$), trifluoroiodomethane ($CF_3I$), and 1,1,1-trifluoroiodoethane ($CF_3CH_2I$).

Examples of the hydrocarbon include propane (R290), cyclopropane, butane, isobutane, pentane, and isopentane.

In a case in which the working medium according to the disclosure contains component(s) other than HFO-1123, HFO-1234yf and carbon dioxide, the total content of said other component(s) is 1.0% by mass or less, preferably 0.5% by mass or less, and may be 0% by mass, with respect to the total amount of the working medium. In a case in which the working medium contains two or more kinds of said other components, the content of each of said other components is less than 1.0% by mass, and is preferably 0.5% by mass or less.

The content of water in the working medium, determined as the water content measured by Karl Fischer coulometric titration, is preferably 20 ppm by mass or less, and more preferably 15 ppm by mass or less, with respect to the total amount of the working medium. When the content of water is 20 ppm by mass or less, freezing in a capillary tube, for example, which is an example of a decompressor in a heat cycle system, hydrolysis of the working medium or a refrigerating machine oil, degradation of materials due to acid components generated in the device, generation of contaminants, and the like, are reduced.

The content of air at 25°C in the gas phase of the working medium, as the concentration of air measured by gas chromatography, is preferably less than 15,000 volume ppm, and more preferably 8,000 volume ppm or less. When the content of air is less than 15,000 volume ppm, poor heat transfer in the condenser and the evaporator, as well as an increase in operating pressure, can be suppressed. In particular, a reaction of oxygen in the air with the working medium or a refrigerating machine oil to cause decomposition can be suppressed.

The working medium may contain unavoidable components such as impurities produced as by-products during the production and solvents used during the production. From the viewpoint of stability, the total content of these unavoidable components is preferably 1.0% by mass or less, more preferably 0.5% by mass or less, and still more preferably 0.1% by mass or less, with respect to the total amount of the working medium. From the viewpoint of simplifying the purification process in the production of the working medium, the total content of the unavoidable components may be 50.0 ppm by mass or more, or 100.0 ppm by mass or more.

Examples of unavoidable components include hydrogen fluoride, methane, chloromethane, dichlorodifluoromethane (CFC-12), 1,1,2-trichloro-1,2,2-trifluoroethane (CFC-113), chlorodifluoromethane (HCFC-22), chlorofluoromethane (HCFC-31), dichlorotrifluoroethane (HCFC-123), 1,2-dichloro-1,1,2-trifluoroethane (HCFC-123a), 1-chloro-1,2,2,2-tetrafluoroethane (HCFC-124), 1-chloro-1,1,2,2-tetrafluoroethane (HCFC-124a), chlorotrifluoroethane (HCFC-133), 2-chloro-1,1,1-trifluoroethane (HCFC-133a), 1-chloro-1,1,2-trifluoroethane (HCFC-133b), 2-chloro-1,1-difluoroethane (HCFC-142), 1-chloro-1,1-difluoroethane (HCFC-142b), trifluoromethane (HFC-23), difluoromethane (HFC-32), fluoromethane (HFC-41), pentafluoroethane (HFC-125), 1,1,2,2-tetrafluoroethane (HFC-134), 1,1,1,2-tetrafluoroethane (HFC-134a), 1,1,2-trifluoroethane (HFC-143), 1,1,1-trifluoroethane (HFC-143a), 1,1-difluoroethane (HFC-152a), 1,1,1,2,2,3,3-heptafluoropropane (HFC-227ca), 1, 1,1,2,3,3,3-heptafluoropropane (HFC-227ea), 1,1,1,3,3,3-hexafluoropropane (HFC-236fa), 1,1,1,2,3,3-hexafluoropropane (HFC-236ea), 1,1-difluoroethylene (HFO-1132a), (E)-1,2-difluoroethylene (HFO-1132(E)), (Z)-1,2-difluoroethylene (HFO-1132(Z)), fluoroethylene (HFO-1141), 1,1,3,3,3-pentafluoropropene (HFO-1225zc), (E)-1,3,3,3-tetrafluoropropene (HFO-1234ze(E)), (Z)-1,3,3,3-tetrafluoropropene (HFO-1234ze(Z)), 3,3,3-trifluoropropene (HFO-1243zf), 3,3-difluoropropene (HFO-1252zf), 1-chloro-2,2-difluoroethylene (HCFC-1122), (E)-1-chloro-1,2-difluoroethylene, (Z)-1-chloro-1,2-difluoroethylene, (E)-1-chloro-2-fluoroethylene (HCFO-1131(E)), (Z)-1-chloro-2-fluoroethylene (HCFO-1131(Z)), (E)-1,2-dichloro-1,2-difluoroethylene (CFO-1112(E)), (Z)-1,2-dichloro-1,2-difluoroethylene (CFO-1112(Z)), chlorotrifluoroethylene (CFO-1113), tetrafluoroethylene (FO-1114), hexafluoropropene (FO-1216), and perfluorocyclobutane.

The working medium according to the disclosure is suitable as a substitute for dichlorodifluoromethane (R12), chlorodifluoromethane (R22), difluoromethane (R32), tetrafluoroethane (R134a), R404A, R407A, R407C, R407F, R407H, R410A, R413A, R417A, R422A, R422B, R422C, R422D, R423A, R424A, R426A, R427A, R430A, R434A, R437A, R438A, R448A, R449A, R449B, R449C, R452A, R452B, R454A, R454B, R454C, R455A, R465A, R502, R507, R513A, R1234yf, or (E)-1,3,3,3-tetrafluoropropene (R1234ze(E)).

In particular, the working medium according to the disclosure is suitable as a substitute for R12, R22, R32, R134a, R404A, R407C, R407F, R407H, R410A, R448A, R449A, R454C, R455A, R465A, R1234yf, or R1234ze(E).

It is noted that R1234yf is the same as HFO-1234yf.

In particular, the working medium according to the disclosure is suitable as a substitute for R404A, R407C or R410A, each of which is currently widely used.

Further, the working medium according to the disclosure has a saturated vapor pressure at 55°C, as a relative value based on R404A, of about 1.219 or less. In addition, the working medium has a saturated vapor pressure at 55°C, as a relative value based on R410, of about 0.915 or less. The working medium used in the heat cycle system according to the disclosure is particularly suitable as a substitute for R404A or R410A.

The working medium is used, for example, in a refrigeration cycle apparatus in which the evaporation temperature is controlled to -40°C or higher, preferably to -35°C or higher, and more preferably to -30°C or higher.

<Global Warming Potential (GWP)>

In the disclosure, the "GWP" refers to the 100-year GWP in the Sixth Assessment Report (AR6) of the Intergovernmental Panel on Climate Change (IPCC), unless otherwise specified.

The GWP of a mixture is defined as a weighted average based on the mass fractions.

The GWP of the working medium according to the disclosure is preferably less than 1.

<Heat of Combustion>

The heat of combustion (MJ/kg) per mass is defined as an index for determining the flammability of a refrigerant in the American Society of Heating, Refrigeration and Air-conditioning Engineers (ASHRAE) Standard 34. In this standard, a substance having a calorific value of 19.000 MJ/kg or greater is defined as one of the indices for a "highly flammable" refrigerant.

The heat of combustion is represented by the difference between the total of the formation enthalpies of the products in a product system and the formation enthalpies of the compounds in the reaction system in a combustion reaction equation.

The enthalpy of formation is described in, for example, the Chemistry Handbook (Kagaku Binran), international standards (see Reference A), and various handbooks.

The formation enthalpy of a novel compound can be determined in accordance with Benson group increment theory (see Reference B), or by a computational chemistry method.

Further, the concept of the combustion reaction equation for halogen-containing compounds is defined in international standards (See References A and C).

Reference A: ANSI/ASHRAE Standard 34 (2016), Designation and Safety Classification of Refrigerants.

Reference B: S. Benson, Thermochemical kinetics, 2nd Ed., Wiley Interscience, New York (1976).
Reference C: ISO 817 (2014), Refrigerant: Designation and Safety Classification.

In these standards, the heat of combustion is defined as positive for an exothermic reaction.

In the disclosure, the heat of combustion of a working medium is defined as a value obtained by allowing 1 mole of the working medium to undergo a complete stoichiometric combustion with oxygen to determine a value of combustion heat, and converting the value into a value of heat of combustion per 1 kg of the working medium, and refers to a theoretical value calculated under the following assumptions.

Assume the compounds in the product system and the reaction system to be gasses.

Assume the combustion products to be HF (g), $CO_2$ (g), $COF_2$ (g), and $H_2O$ (g). Further, in a case in which nitrogen or iodine is a part of the molecular structure, $N_2$ (g) or $I_2$ (g) is added to the combustion products.

When determining the heat of combustion of a working medium, each compound contained in the working medium is broken down into atoms constituting each compound, and a hypothetical substance containing each atom is defined taking into consideration the molar ratio in the working medium. The heat of combustion is calculated using the combustion reaction equation of the hypothetical substance. Here, $C_qH_rF_s$ in the following equation corresponds to the hypothetical substance.

For example, the combustion reaction equation is defined depending on the magnitudes of the number of H atoms (r) and the number of F atoms (s) in the substance, and the following equation is used as the combustion reaction equation when the number of H atoms (r) is equal to or larger than the number of F atoms (s).

$$C_qH_rF_s + \left(q + \frac{r-s}{4}\right)O_2 = sHF + qCO_2 + \frac{r-s}{2}H_2O \qquad (r \geq s)$$

On the other hand, when the number of H atoms (r) is smaller than the number of F atoms (s), the following equation is used as the combustion reaction equation.

$$C_qH_rF_s + \left(q - \frac{s-r}{4}\right)O_2 = rHF + \frac{s-r}{2}COF_2 + \left(q - \frac{s-r}{2}\right)CO_2 \qquad (r < s)$$

The heat of combustion of the working medium is preferably 10.310 MJ/kg or less, and more preferably 10.260 MJ/kg or less.

<Saturated Vapor Pressure>

The saturated vapor pressure is determined by Reference Fluid Thermodynamic and Transport Properties Database (REFPROP 10.0) by the National Institute of Science and Technology (NIST). The same applies to the saturated liquid pressure, cycle performance, discharge temperature, condensation pressure, evaporation pressure and refrigeration effect described below.

In a case in which the working medium is a single medium or an azeotropic mixed medium, the saturated liquid pressure and the saturated vapor pressure at the same temperature are substantially the same. In contrast, in a case in which the working medium is a non-azeotropic mixed medium, the saturated vapor pressure and the saturated liquid pressure at the same temperature are different from each other, and the saturated vapor pressure is lower than the saturated liquid pressure.

The saturated vapor pressure of the working medium is preferably 0.082 MPa or greater, more preferably 0.104 MPa or greater, and still more preferably 0.130 MPa or greater, within the operating temperature range of the heat cycle system.

The evaporation temperature is preferably -40°C or higher, and more preferably from -40 to 15°C, from the viewpoint of adjusting the saturated vapor pressure to 0.082 MPa or greater.

The evaporation temperature is preferably -35°C or higher, and more preferably from -35 to 15°C, from the viewpoint of adjusting the saturated vapor pressure to 0.104 MPa or greater.

The evaporation temperature is preferably -30°C or higher, and more preferably from -30 to 15°C, from the viewpoint of adjusting the saturated vapor pressure to 0.130 MPa or greater.

<Saturated Liquid Pressure>

In a case in which the working medium is a single medium or an azeotropic mixed medium, the saturated liquid pressure and the saturated vapor pressure at the same temperature are substantially the same. In contrast, in a case in which the working medium is a non-azeotropic mixed medium, the saturated liquid pressure and the saturated vapor pressure at the same temperature are different from each other, and the saturated liquid pressure is higher than the saturated vapor pressure.

The saturated liquid pressure of the working medium at 55°C is preferably 3.150 MPa or less, more preferably 3.100 MPa or less, and still more preferably 3.000 MPa or less.

<Cycle Performance>

The cycle performance, which is a property required when using a working medium in a heat cycle system, can be evaluated by the coefficient of performance (also referred to as "COP" in the disclosure) and capacity (also referred to as "CAP" in the disclosure) per unit volume (suction volume of the compressor). In a case in which the heat cycle system is a refrigeration cycle system, the capacity refers to "refrigeration capacity". The COP and CAP can be calculated by the method described later.

In the disclosure, preferred ranges of the cycle performance, as well as those of the discharge temperature, the condensation pressure, the evaporation pressure and the refrigeration effect, which will be described later, are preferred ranges calculated using a refrigeration cycle under the temperature condition of the following Condition 1, Condition 2, Condition 3, or Condition 4. In the following description, the preferred ranges of each performance are preferred ranges in any of the cases of using Condition 1, Condition 2, Condition 3, and Condition 4.

(Condition 1)

· Condensation temperature: 40°C (in the case of a non-azeotropic mixed medium, the average temperature of the condensation start temperature and the condensation completion temperature)
· Evaporation temperature: -40°C (in the case of a non-azeotropic mixed medium, the average temperature of the evaporation start temperature and the evaporation completion temperature)
· Degree of superheating (SH): 20°C
· Degree of subcooling (SC): 0°C
· Compressor efficiency: 0.7

(Condition 2)

· Condensation temperature: 40°C (in the case of a non-azeotropic mixed medium, the average temperature of the condensation start temperature and the condensation completion temperature)
· Evaporation temperature: -20°C (in the case of a non-azeotropic mixed medium, the average temperature of the evaporation start temperature and the evaporation completion temperature)
· Degree of superheating (SH): 20°C
· Degree of subcooling (SC): 0°C
· Compressor efficiency: 0.7

(Condition 3)

· Condensation temperature: 40°C (in the case of a non-azeotropic mixed medium, the average temperature of the condensation start temperature and the condensation completion temperature)
· Evaporation temperature: 0°C (in the case of a non-azeotropic mixed medium, the average temperature of the evaporation start temperature and the evaporation completion temperature)
· Degree of superheating (SH): 20°C
· Degree of subcooling (SC): 0°C
· Compressor efficiency: 0.7

(Condition 4)

· Condensation temperature: 40°C (in the case of a non-azeotropic mixed medium, the average temperature of the condensation start temperature and the condensation completion temperature)
· Evaporation temperature: 15°C (in the case of a non-azeotropic mixed medium, the average temperature of the evaporation start temperature and the evaporation completion temperature)
· Degree of superheating (SH): 20°C
· Degree of subcooling (SC): 0°C
· Compressor efficiency: 0.7

The COP of the working medium is preferably 0.980 or greater, more preferably 0.990 or greater, and still more preferably 0.995 or greater, relative to that of R404A. The upper limit of the COP is not particularly limited, and the higher the COP, the more preferable it is.

The CAP of the working medium is preferably 0.780 or greater, more preferably 0.800 or greater, and still more preferably 0.850 or greater, relative to that of R404A. The upper limit of the CAP is not particularly limited, and the higher the CAP, the more preferable it is.

<Discharge Temperature>

The discharge temperature is another item to be evaluated when applying the working medium to a refrigeration cycle system.

The discharge temperature of the working medium is preferably 140°C or lower, more preferably 120°C or lower, and still more preferably 110°C or lower, from the viewpoint of extending the service life of members of the refrigeration cycle system.

<Condensation Pressure (Pc)>

The condensation pressure (also referred to as "Pc" in the disclosure) is another item to be evaluated when applying the working medium to a refrigeration cycle system.

The condensation pressure of the working medium is preferably 1.100 or less, more preferably 1.090 or less, and still more preferably 1.080 or less, relative to that of R404A, from the viewpoint of the pressure-resistance design of the refrigeration cycle system. The lower limit of the condensation pressure of the working medium is not particularly limited, and the condensation pressure may be 0.850 or greater, 0.860 or greater, or 0.870 or greater, relative to that of R404A.

<Evaporation Pressure (Pe)>

The evaporation pressure (also referred to as "Pe" in the disclosure) is another item to be evaluated when applying the working medium to a refrigeration cycle system.

The evaporation pressure of the working medium is preferably 0.680 or greater, more preferably 0.700 or greater, and still more preferably 0.730 or greater, relative to that of R404A, from the viewpoint of improving the suction of the working medium by the compressor. The upper limit of the evaporation pressure of the working medium is not particularly limited, and the evaporation pressure may be 1.100 or less, 1.080 or less, or 1.050 or less, relative to that of R404A.

<Refrigeration Effect (Wr)>

The refrigeration effect (also referred to as "Wr" in the disclosure) is another item to be evaluated when applying the working medium to a refrigeration cycle system. The refrigeration effect refers to the amount of heat (kJ/kg) per unit weight absorbed by the working medium in an evaporator in the refrigeration cycle system. The value obtained by multiplying Wr by the mass flow rate of the working medium is the refrigeration capacity Q.

The refrigeration effect of the working medium is preferably 1.000 or greater, more preferably 1.100 or greater, and still more preferably 1.150 or greater, relative to that of R404A.

[Composition for Heat Cycle System]

The working medium according to the disclosure may be used in combination with other component(s) such as a refrigerating machine oil. The composition for a heat cycle system in an embodiment contains the working medium according to the disclosure and a refrigerating machine oil.

(Refrigerating Machine Oil)

As the refrigerating machine oil, a conventionally known refrigerating machine oil used in a composition for a heat cycle system may be used. Specific examples of the refrigerating machine oil include an oxygen-containing synthetic oil (e.g., an ester-based refrigerating machine oil or an ether-based refrigerating machine oil), a fluorine-based refrigerating machine oil, a mineral-based refrigerating machine oil, and a hydrocarbon-based synthetic oil.

Examples of the ester-based refrigerating machine oil include a dibasic acid ester oil, a polyol ester oil, a complex ester oil, and a polyol carbonate oil.

As the dibasic acid ester oil, an ester of a dibasic acid having from 5 to 10 carbon atoms (e.g., glutaric acid, adipic acid, pimelic acid, suberic acid, azelaic acid or sebacic acid), with a monohydric alcohol having a linear or branched alkyl group and having from 1 to 15 carbon atoms (e.g., methanol, ethanol, propanol, butanol, pentanol, hexanol, heptanol, octanol, nonanol, decanol, undecanol, dodecanol, tridecanol, tetradecanol or pentadecanol) is preferable. As the dibasic acid ester oil, ditridecyl glutarate, di(2-ethylhexyl) adipate, diisodecyl adipate, ditridecyl adipate, or di(3-ethylhexyl) sebacate is preferable.

As the polyol ester oil, an ester of a diol (e.g., ethylene glycol, 1,3-propanediol, propylene glycol, 1,4-butanediol, 1,2-butanediol, 1,5-pentadiol, neopentyl glycol, 1,7-heptanediol or 1,12-dodecanediol) or a polyol having from 3 to 20 hydroxyl groups (e.g., trimethylolethane, trimethylolpropane, trimethylolbutane, pentaerythritol, glycerin, sorbitol, sorbitan or a sorbitol glycerin condensate) with a fatty acid having from 6 to 20 carbon atoms (a linear or branched fatty acid such as hexanoic acid, heptanoic acid, octanoic acid, nonanoic acid, decanoic acid, undecanoic acid, dodecanoic acid, eicosanoic acid or oleic acid; or a so-called neo acid with a quaternary $\alpha$-carbon atom) is preferable. The polyol ester oil may have a free hydroxy group.

As the polyol ester oil, an ester of a hindered alcohol (e.g., neopentyl glycol, trimethylolethane, trimethylolpropane, trimethylolbutane or pentaerythritol) is preferable, and trimethylolpropane tripelargonate, pentaerythritol 2-ethylhexanoate, or pentaerythritol tetrapelargonate is more preferable.

The complex ester oil is an ester of a fatty acid and a dibasic acid with a monohydric alcohol and a polyol. The same compounds as those described above can be used as the fatty acid, the dibasic acid, the monohydric alcohol and the polyol.

The polyol carbonate oil is an ester of carbonic acid with a polyol. Examples of the polyol include the same diols as those described above, and the same polyols as those described above. The polyol carbonate oil may also be a ring-opened polymer of a cyclic alkylene carbonate.

Examples of the ether-based refrigerating machine oil include a polyvinyl ether oil and a polyoxyalkylene oil.

Examples of the polyvinyl ether oil include: a polymer obtained by the polymerization of a vinyl ether monomer such as an alkyl vinyl ether; and a copolymer obtained by the copolymerization of a vinyl ether monomer and a hydrocarbon monomer having an olefinic double bond. One kind of vinyl ether monomer may be used singly, or two or more kinds thereof may be used in combination.

Examples of the hydrocarbon monomer having an olefinic double bond include ethylene, propylene, various butenes, various pentenes, various hexenes, various heptenes, various octenes, diisobutylene, triisobutylene, styrene, $\alpha$-methylstyrene, and various alkylsubstituted styrenes. One kind of hydrocarbon monomer having an olefinic double bond may be used singly, or two or more kinds thereof may be used in combination.

The polyvinyl ether copolymer may be either a block copolymer or a random copolymer. One kind of polyvinyl ether oil may be used singly, or two or more kinds thereof may be used in combination.

Examples of the polyoxyalkylene oil include: a polyoxyalkylene monool; a polyoxyalkylene polyol; an alkyl-etherified product of a polyoxyalkylene monool or a polyoxyalkylene polyol; and an esterification product of a polyoxyalkylene monool or a polyoxyalkylene polyol.

The polyoxyalkylene monool or the polyoxyalkylene polyol can be produced by, for example, a method in which an alkylene oxide having from 2 to 4 carbon atoms (e.g., ethylene oxide or propylene oxide) is subjected to ring-opening addition polymerization with an initiator such as water or a hydroxy group-containing compound, in the presence of a catalyst such as an alkali hydroxide. The oxyalkylene units in the polyalkylene chain in one molecule may be the same throughout the molecule, or two or more kinds of oxyalkylene units may be contained. It is preferred that at least an oxypropylene unit is contained in one molecule.

Examples of the initiator used in the reaction include: water; a monohydric alcohol, such as methanol or butanol; and a polyol, such as ethylene glycol, propylene glycol, pentaerythritol or glycerol.

As the polyoxyalkylene oil, for example, an alkyl-etherified product or an esterification product of a polyoxyalkylene monool or a polyoxyalkylene polyol is preferable. Further, as the polyoxyalkylene oil, a polyalkylene glycol oil is preferable. In particular, an alkyl-etherified product of a polyalkylene glycol in which the terminal hydroxy groups of the polyalkylene glycol are capped with an alkyl group such as methyl group, which is referred to as polyglycol oil, is preferable.

Examples of the fluorine-based refrigerating machine oil include: a compound obtained by substituting the hydrogen atom(s) of a synthetic oil (e.g., a mineral oil described below, a poly $\alpha$-olefin, an alkylbenzene or an alkylnaphthalene) with fluorine atom(s); a fluorine-containing oil; a perfluoropolyether oil; and a fluorinated silicone oil.

Examples of the mineral-based refrigerating machine oil include a mineral oil (e.g., a paraffin-based mineral oil, or a naphthene-based mineral oil) obtained by subjecting a crude oil to distillation at normal pressure or distillation under reduced pressure to obtain a refrigerating machine oil fraction, and then purifying the refrigerating machine oil fraction by combining purification treatments (e.g., solvent deasphalting, solvent extraction, hydrocracking, solvent dewaxing, catalytic dewaxing, hydrorefining and clay treatment) as appropriate.

Examples of the hydrocarbon-based synthetic oil include a poly $\alpha$-olefin, an alkylbenzene, and an alkylnaphthalene.

The composition for a heat cycle system may contain one kind of refrigerating machine oil, or two or more kinds of refrigerating machine oils in combination.

In particular, the refrigerating machine oil preferably includes at least one selected from the group consisting of a polyalkylene glycol oil (PAG), a polyol ester oil (POE), a polyvinyl ether oil (PVE), a silicone oil, a fluorine-containing oil, a mineral oil and a hydrocarbon-based synthetic oil, and more preferably includes at least one selected from the group consisting of a polyalkylene glycol oil (PAG), a polyol ester oil (POE), and a polyvinyl ether oil (PVE).

The refrigerating machine oil may further contain an antioxidant, an extreme pressure agent, an acid scavenger, an oxygen scavenger, a copper deactivator, a corrosion inhibitor, an lubricity agent, an antifoaming agent, and/or the like.

The amount of the refrigerating machine oil in the composition for a heat cycle system may be within any range as long as it does not significantly impair the effect of the disclosure, and is preferably from 10 parts by mass to 100 parts by mass, and more preferably from 20 parts by mass to 50 parts by mass, with respect to 100 parts by mass of the working medium.

(Additives)

The composition for a heat cycle system may contain known additive(s), such as a tracer, a stabilizer, a polymerization inhibitor, and a leak detection material, in addition to the working medium and the refrigerating machine oil.

The tracer is preferably added at a detectable concentration so that, in a case in which dilution, contamination or any other change occurrs in the working medium according to the disclosure, the change can be tracked.

The composition for a heat cycle system may contain only one kind of tracer, or two or more kinds of tracers.

The tracer is not particularly limited, and can be selected from commonly used tracers as appropriate. It is preferrable to select, as the tracer, a compound that cannot be an impurity inevitably mixed in the working medium according to the disclosure.

Examples of the tracer include a hydrofluorocarbon, a hydrochlorofluorocarbon, a chlorofluorocarbon, a hydrochlorocarbon, a fluorocarbon, a deuterated hydrocarbon, a deuterated hydrofluorocarbon, a perfluorocarbon, a fluoroether, a brominated compound, an iodinated compound, an alcohol, an aldehyde, a ketone, and nitrous oxide ($N_2O$). In particular, the tracer is preferably at least one selected from the group consisting of a hydrofluorocarbon, a hydrochlorofluorocarbon, a chlorofluorocarbon, a hydrochlorocarbon, a fluorocarbon, and a fluoroether.

Preferable examples of the tracer include the following compounds:

HC-40 (chloromethane, $CH_3Cl$),
HFC-161 (fluoroethane, $CH_3CH_2F$),
HFC-245fa (1,1,1,3,3-pentafluoropropane, $CF_3CH_2CHF_2$),
HFC-236fa (1,1,1,3,3,3-hexafluoropropane, $CF_3CH_2CF_3$),
HFC-236ea (1,1,1,2,3,3-hexafluoropropane, $CF_3CHFCHF_2$),
HCFC-22 (chlorodifluoromethane, $CHClF_2$),
HCFC-31 (chlorofluoromethane, $CH_2ClF$),
CFC-1113 (chlorotrifluoroethylene, $CF_2=CClF$),
HFE-125 (trifluoromethyl-difluoromethyl ether, $CF_3OCHF_2$),
HFE-134a (trifluoromethyl-fluoromethyl ether, $CF_3OCH_2F$),
HFE-143a (trifluoromethyl-methyl ether, $CF_3OCH_3$),
HFE-227ea (trifluoromethyl-tetrafluoroethyl ether, $CF_3OCHFCF_3$), and
HFE-236fa (trifluoromethyl-trifluoroethyl ether, $CF_3OCH_2CF_3$).

The content of the tracer is preferably from 10 to 1,000 ppm by mass, more preferably from 30 to 500 ppm by mass, still more preferably from 50 to 300 ppm by mass, particularly preferably 75 to 250 ppm by mass, and most preferably from 100 to 200 ppm by mass, with respect to the total amount of the working medium.

The stabilizer is a component that improves the thermal and oxidative stability of the working medium. Examples of the stabilizer include a conventionally known stabilizer, such as an oxidation resistance enhancer, a heat resistance enhancer, or a metal deactivator.

Examples of the oxidation resistance enhancer and the heat resistance enhancer include N,N'-diphenylphenylenediamine, p-octyldiphenylamine, p,p'-dioctyldiphenylamine, N-phenyl-1-naphthylamine, N-phenyl-2-naphthylamine, N-(p-dodecyl)phenyl-2-naphthylamine, di-1-naphthylamine, di-2-naphthylamine, N-alkylphenothiazine, 6-(t-butyl)phenol, 2,6-di-(t-butyl)phenol, 4-methyl-2,6-di-(t-butyl)phenol, and 4,4'-methylenebis(2,6-di-t-butylphenol). One kind of oxidation resistance enhancer and/or heat resistance enhancer may be used singly, or two or more kinds thereof may be used in combination.

Examples of the metal deactivator include: imidazole, benzimidazole, 2-mercaptobenzothiazole, 2,5-dimethylcaptothiadiazole, salicylidine-propylenediamine, pyrazole, benzotriazole, tolyltriazole, 2-methylbenzimidazole, 3,5-dimethylpyrazole, and methylenebis-benzotriazole; an organic acid or an ester thereof; a primary, a secondary or a tertiary aliphatic amine; an amine salt of an organic acid or an inorganic acid; a heterocyclic nitrogen-containing compound; and an amine salt of an alkyl acid phosphate, or a derivative thereof.

The content of the stabilizer may be within any range as long as it does not significantly impair the effect of the disclosure, and is typically from 0.01 to 5% by mass, preferably from 0.05 to 3% by mass, more preferably from 0.1 to 2% by mass, still more preferably from 0.25 to 1.5% by mass, and particularly preferably from 0.5 to 1% by mass, with respect to 100 parts by mass of the working medium.

The polymerization inhibitor is not particularly limited, and can be selected from commonly used polymerization inhibitors as appropriate. The composition for a heat cycle system may contain only one kind of polymerization inhibitor, or two or more kinds of polymerization inhibitors.

Examples of the polymerization inhibitor include 4-methoxy-1-naphthol, hydroquinone, hydroquinone methyl ether, dimethyl-tert-butylphenol, 2,6-di-tert-butyl-p-cresol, and benzotriazole.

The content of the polymerization inhibitor is not particularly limited, and is typically from 0.01 to 5% by mass, preferably from 0.05 to 3% by mass, more preferably from 0.1 to 2% by mass, still more preferably from 0.25 to 1.5% by mass, and particularly preferably from 0.5 to 1% by mass, with respect to the total amount of the working medium.

Examples of the leak detection material include a UV fluorescent dye, an odorous gas, or an odor masking agent.

Examples of the UV fluorescent dye include conventionally known UV fluorescent dyes, such as those described in U.S. Patent No. 4249412, Japanese National-Phase Publication (JP-A) No. H10-502737, JP-A No. 2007-511645, JP-A No. 2008-500437, and JP-A No. 2008-531836.

Examples of the odor masking agent include conventionally known fragrances, such as those described in JP-A No. 2008-500437 and JP-A No. 2008-531836.

In the case of using a leak detection material, a solubilizer that improves the solubility of the leak detection material into the working medium may be used.

Examples of the solubilizer include those described in JP-A No. 2007-511645, JP-A No. 2008-500437, and JP-A No. 2008-531836.

The amount of the leak detection material may be within any range as long as it does not significantly impair the effect of the disclosure, and is preferably 2 parts by mass or less, and more preferably 0.5 parts by mass or less, with respect to 100 parts by mass of the working medium.

The composition for a heat cycle system is used in a heat cycle system. The heat cycle system may be a heat pump system that utilizes the heat produced by the condenser, or a refrigeration cycle system that utilizes the cold heat produced in the evaporator.

[Heat Cycle System]

The heat cycle system according to the disclosure includes:

the working medium or the composition for a heat cycle system according to the disclosure;
a compressor configured to compress the vapor of the working medium;
a condenser configured to cool and liquefy the vapor of the working medium discharged from the compressor;
a decompressor configured to decompress the working medium discharged from the condenser; and
an evaporator configured to heat the working medium discharged from the decompressor,
wherein the evaporator controls the evaporation temperature of the working medium at -40°C or higher.

The heat cycle system to which the working medium is applied may be a heat pump apparatus that utilizes the heat produced in the condenser, or a refrigeration cycle apparatus that utilizes the cold heat produced in the evaporator. The heat cycle system according to the disclosure may be of a direct expansion type or of an indirect expansion type. The heat cycle system of an indirect expansion type may be, for example, of a flooded evaporator type.

The "heat cycle" includes a series of cycles, namely: (1) compressing the working medium in a gaseous state in the compressor; (2) cooling the working medium in the condenser to convert it into a liquid state having a high pressure; (3) reducing the pressure by an expansion valve, which is an example of the decompressor; and further, (4) evaporating the working medium at a low temperature in the evaporator to take away the heat by the heat of evaporation. The compressor can be classified into a turbo (centrifugal) compressor, a reciprocating compressor, a rotary compressor, a twin-screw compressor, a single-screw compressor, a scroll compressor and the like depending on the manner of compressing the working medium in a gaseous state, and can be selected depending on heat capacity, compression ratio, and size.

(Refrigeration Cycle System)

As an example of the heat cycle system, a refrigeration cycle system will be described below.

The refrigeration cycle system refers to a system in which the working medium removes thermal energy from a load fluid in an evaporator to cool the load fluid, thereby cooling the fluid to a lower temperature.

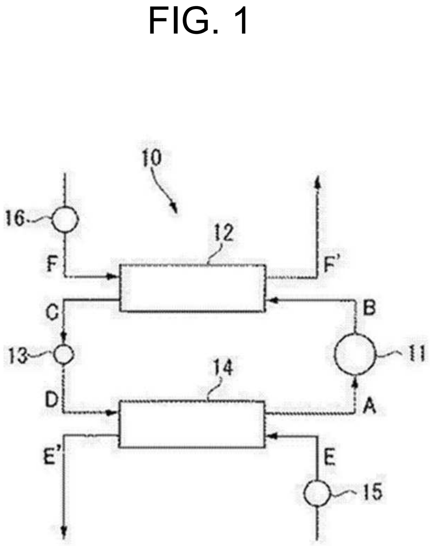

FIG. 1 is a schematic configuration diagram illustrating an example of the refrigeration cycle system according to the disclosure. A refrigeration cycle system 10 is a system schematically configured to include: a compressor 11 configured to compress a working medium vapor A to convert the medium vapor into a working medium vapor B having a high temperature and a high pressure; a condenser 12 configured to cool and liquefy the working medium vapor B discharged from the compressor 11 to convert the medium vapor into a working medium C having a low temperature and a high pressure; an expansion valve 13 configured to expand the working medium C discharged from the condenser 12 to convert the medium into a working medium D having a low temperature and a low pressure; an evaporator 14 configured to heat the working medium D discharged from the expansion valve 13 to convert the medium into the working medium vapor A having a high temperature and a low pressure; a pump 15 configured to supply load fluid E to the evaporator 14; and a pump 16 configured to supply fluid F to the condenser 12.

In the refrigeration cycle system 10, a cycle including the following processes (i) to (iv) is repeated.

(i) Compressing the working medium vapor A discharged from the evaporator 14 by the compressor 11 to convert the medium vapor into the working medium vapor B having a high temperature and a high pressure (hereinafter referred to as "process AB").

(ii) Cooling and liquefying the working medium vapor B discharged from the compressor 11 in the condenser 12 by the fluid F to convert the medium vapor into the working medium C having a low temperature and a high pressure. At this time, the fluid F is heated and converted into fluid F', and then discharged from the condenser 12 (hereinafter referred to as "process BC").

(iii) Expanding the working medium C discharged from the condenser 12 by the expansion valve 13 to convert the medium into the working medium D having a low temperature and a low pressure (hereinafter referred to as "process CD").

(iv) Heating the working medium D discharged from the expansion valve 13 in the evaporator 14 by the load fluid E to convert the medium into the working medium vapor A having a high temperature and a low pressure. At this time, the load fluid E is cooled and converted into load fluid E', and then discharged from the evaporator 14 (hereinafter referred to as "process DA").

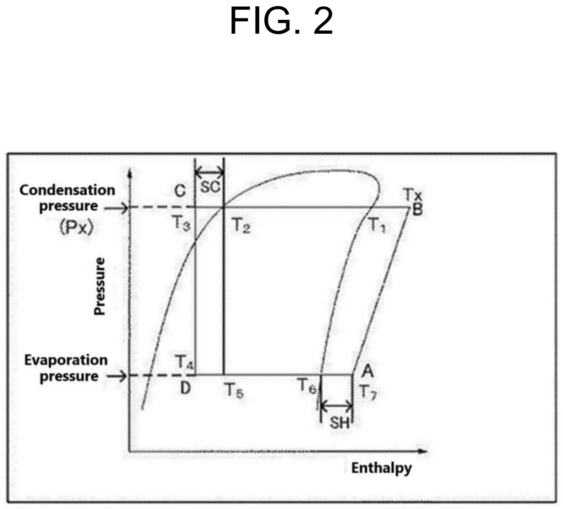

The refrigeration cycle system 10 is a cycle system including adiabatic and isentropic changes, isenthalpic changes, and isobaric changes. When the state changes of the working medium are illustrated on the pressure-enthalpy diagram (curve) shown in FIG. 2, the state changes can be illustrated with A, B, C and D as vertices.

The process AB is a process of performing adiabatic compression in the compressor 11 to convert the working medium vapor A having a low temperature and a low pressure into the working medium vapor B having a high temperature and a high pressure, and is indicated by the line A-B in FIG. 2. As will be described later, the working medium vapor A is introduced into the compressor 11 in an superheated state, and the resulting working medium vapor B is also a vapor in an superheated state. The term "compressor suction gas density" refers to the density ($\rho$s) in the state of A in FIG. 2. The term "compressor discharge gas temperature" (discharge temperature) refers to the temperature (Tx) in the state of B in FIG. 2, and is the highest temperature in the refrigeration cycle. The term "compressor discharge pressure" (discharge pressure) refers to the pressure (Px) in the state of B in FIG. 2, and is the highest pressure in the refrigeration cycle. Since the process BC is an isobaric cooling process, the discharge pressure shows the same value as the condensation pressure (Pc). Accordingly, the condensation pressure is indicated as Px in FIG. 2 for convenience.

The process BC is a process of performing isobaric cooling in the condenser 12 to convert the working medium vapor B having a high temperature and a high pressure into the working medium C having a low temperature and a high pressure, and is indicated by the line B-C in FIG. 2. The pressure at this time is the condensation pressure. Between the intersections of the pressure-enthalpy curve and the line B-C, the intersection T1 having a higher enthalpy indicates the condensation temperature, and the intersection T2 having a lower enthalpy indicates the condensation boiling point temperature. Here, in a case in which the working medium is a non-azeotropic mixed medium, the temperature glide in the condenser is indicated by the difference between T1 and T2.

In the process BC, the condensation temperature is preferably 75°C or lower, more preferably 70°C or lower, still more preferably 60°C or lower, and particularly preferably 55°C or lower. This is because the condensation temperature is preferably equal to or lower than the critical temperature of the working medium. The "critical temperature" refers to the temperature at the end point of the saturated liquid line and the saturated vapor line on the high pressure and high temperature side. At a temperature equal to or higher than the critical temperature, no evaporation phenomenon or liquefaction phenomenon occurs, no distinction between liquid and gas phases is recognized, and no phase change occurs. When the temperature of the working medium is adjusted to equal to or lower than the critical temperature, it is possible to liquefy (condense) the working medium and to maintain refrigeration performance.

In the disclosure, the critical temperature of the working medium is preferably 70°C or higher, and more preferably 75°C or higher.

The process CD is a process of performing isenthalpic expansion by the expansion valve 13 to convert the working medium C having a low temperature and a high pressure into the working medium D having a low temperature and a low pressure, and is indicated by the line C-D in FIG. 2. When the temperature of the working medium C having a low temperature and a high pressure is indicated as T3, the value of T2 - T3 corresponds to the degree of subcooling (SC) of the working medium in the cycle of (i) to (iv).

The process DA is a process of performing isobaric heating in the evaporator 14 to convert the working medium D having a low temperature and a low pressure back into the working medium vapor A having a high temperature and a low pressure, and is indicated by the line D-A in FIG. 2. The pressure at this time is the evaporation pressure. Between the intersections of the pressure-enthalpy curve and the line D-A, the intersection T6 having a higher enthalpy indicates the evaporation temperature. Here, in a case in which the working medium is a non-azeotropic mixed medium, the temperature glide in the evaporator is indicated by the difference between T6 and T4. When the temperature of the working medium vapor A is indicated as T7, the value of T7 - T6 corresponds to the degree of superheating (SH) of the working medium in the cycle of (i) to (iv). T4 indicates the temperature of the working medium D.

The CAP and the COP of the working medium are determined by the following Equations (11), (12), (13) and (14) using hA, hB, hC and hD, which are respectively the enthalpies of the working medium in the states of A (after evaporation, low temperature and low pressure), B (after compression, high temperature and high pressure), C (after condensation, low temperature and high pressure) and D (after expansion, low temperature and low pressure), as well as the mass circulation rate, qmr, of the working medium. Here, it is assumed that there is no pressure loss in piping and heat exchangers.

In a case in which the loss work of the compressor is applied to the working medium as heat, a working medium vapor B' after the process AB is represented by the following equation, using hA, hB, and the compressor efficiency $\eta$.

$$hB' = hA + (hB - hA)/\eta$$

The cycle performance of the working medium is determined by performing theoretical refrigeration cycle calculations for the working medium under predetermined temperature conditions of the refrigeration cycle, using the Reference Fluid Thermodynamic and Transport Properties Database (REFPROP 10.0) from the National Institute of Science and Technology (NIST).

The physical property data and the mixing rules of HFO-1123 are determined using the values described in: Akasaka, R., Higashi, Y., Sakoda, N., Fukuda, S., and Lemmon, E.W., Thermodynamic properties of trifluoroethene (R1123): (p, $\rho$, T) behavior and fundamental equation of state, International Journal of Refrigeration., 2020, 119, 457-467; and Akasaka, R., and Lemmon, E. W., A New Fundamental Equation of State for R1123 and its Applications to Mixture Models for Mixtures with R32 and R1234yf, the 6th IIR Conference on Thermophysical Properties and Transfer Processes of Refrigerants, 2021, as well as using measured values.

$$CAP = (hA - hD) \times \rho s = wr \times \rho s \tag{11}$$

$$COP = Q/P = qmr(hA - hD)/qmr(hB - hA) = (hA - hD)/(hB - hA) \tag{12}$$

$$Q = qmr(hA - hD) \tag{13}$$

$$P = qmr(hB - hA) \tag{14}$$

When the compressor efficiency is taken into account, the COP and P are represented by the following equations.

$$COP = Q/P = (hA - hD)/(hB' - hA) \tag{15}$$

$$P = qmr(hB' - hA) \qquad\qquad (16)$$

The evaporator controls the evaporation temperature of the working medium at - 40°C or higher, preferably -35°C or higher, and more preferably -30°C or higher.

The evaporator preferably controls the evaporation temperature of the working medium within a range of from -40 to 15°C, more preferably from -35 to 15°C, and still more preferably from -30 to 15°C. The evaporation temperature of the working medium in the evaporator may be controlled automatically.

In the disclosure, the "evaporation temperature" refers to a temperature at which the working medium absorbs heat and turns into vapor in the evaporation process of the heat cycle system. In the disclosure, the "condensation temperature" refers to a temperature at which the vapor of the working medium releases heat and turns into liquid in the condensation process of the heat cycle system.

The evaporation temperature can be determined by measuring the temperature at an inlet of the evaporator and/or an outlet of the evaporator. In a case in which the working medium is a single medium or an azeotropic mixed medium, the evaporation temperature is constant. In a case in which the working medium is a non-azeotropic mixed medium, however, the evaporation temperature is the average temperature of the evaporation start temperature and the evaporation completion temperature, and therefore, is calculated by the equation: evaporation temperature = (evaporation start temperature + evaporation completion temperature)/2.

The condensation temperature can be determined by measuring the temperature at an inlet of the condenser and/or an outlet of the condenser. In a case in which the working medium is a single medium or an azeotropic mixed medium, the condensation temperature is constant. In a case in which the working medium is a non-azeotropic mixed medium, however, the condensation temperature is the average temperature of the condensation start temperature and the condensation completion temperature, and therefore, is calculated by the equation: condensation temperature = (condensation start temperature + condensation completion temperature)/2.

Specific examples of the heat cycle system include chilling and freezing equipment, air-conditioning equipment, heating and hot-water supply equipment, electric power generation systems, heat transport apparatuses, and secondary cooling apparatuses. In particular, the heat cycle system is preferably used as air-conditioning equipment, which is often installed outdoors and the like, since the heat cycle system is capable of exhibiting heat cycle performance stably and safely even in an operational environment at a higher temperature. The heat cycle system is also preferably used as freezing and refrigeration equipment.

Specific examples of the air-conditioning equipment include room air conditioners, package air conditioners (e.g., package air conditioners for retail stores, package air conditioners for buildings, and package air conditioners for facilities), gas engine heat pumps, air-conditioning apparatuses for use in trains, and air-conditioning apparatuses for use in automobiles.

The air-conditioning apparatus for use in automobiles is preferably an air-conditioning apparatus for use in gasoline vehicles, an air-conditioning apparatus for use in hybrid vehicles, an air-conditioning apparatus for use in electric vehicles, or an air-conditioning apparatus for use in hydrogen automobiles, and more preferably an air-conditioning apparatus for use in electric vehicles.

Specific examples of the chilling and freezing equipment include refrigerated displays (e.g., refrigerator showcases and freezer showcases), refrigerators, freezers, water chilling equipment, chilling and freezing units, freezers for chilling and freezing warehouses, chillers (chilling units), centrifugal refrigerating machines, screw refrigerating machines, vending machines, and ice makers.

Specific examples of the heating and hot-water supply equipment include heat pump water heaters, heat pump hot-water heaters, heat pump fan heaters, heat pumps that generate steam and hot air, and exhaust heat recovery heat pumps.

The electric power generation system is preferably an electric power generation system by Rankine cycle system. The electric power generation system may specifically be, for example, a system in which: the working medium is heated in an evaporator by geothermal energy, solar heat, waste heat within a medium to high temperature range of from about 50°C to 200°C, or the like; the working medium converted into a vapor having a high temperature and a high pressure is adiabatically expanded in an expansion device; and a power generator is driven by the work generated by the adiabatic expansion to generate power.

The heat transport apparatus is preferably a latent heat transport apparatus. The latent heat transport apparatus may be, for example, a heat pipe or a two-phase closed thermosiphon apparatus, which performs latent heat transport utilizing phenomena such as evaporation, boiling and condensation of the working medium enclosed in the apparatus. The heat pipe is used in a relatively small cooling apparatus, such as a cooling apparatus in a heat generating portion of a semiconductor element or an electronic device. The two-phase closed thermosiphon apparatus does not require a wick and has a simple structure, and therefore, is widely used in a gas-gas heat exchanger, and for acceleration of snow-melting and freezing prevention on roads, for example.

[Heat Cycle Method]

The heat cycle method according to the disclosure is a method including:

compressing the vapor of the working medium according to the disclosure;
cooling and liquefying the vapor of the working medium discharged from a compressor;
decompressing the liquefied working medium; and
heating the decompressed working medium at an evaporation temperature of -40°C or higher.

The evaporation temperature is preferably -35°C or higher, and more preferably - 30°C or higher. The details of the working medium and the heat cycle are as described above.

In the heat cycle method according to the disclosure, the decompressed working medium is preferably heated at an evaporation temperature of from -40 to 15°C, more preferably heated at an evaporation temperature of from -35 to 15°C, and still more preferably heated at an evaporation temperature of from -30 to 15°C.

Examples

The disclosure will be described below more specifically with reference to Examples. However, embodiments of the disclosure are not limited to the following Examples. Examples 1 to 4 are reference examples, Examples 5 to 9 are comparative examples, and Examples 10 to 45 are examples according to the disclosure.

The working media, containing HFO-1123, HFO-1234yf and carbon dioxide and having compositions shown in Tables 2 and 3 (% by mass), were evaluated. The symbol "-" in the tables indicates that the corresponding component is not included.

The saturated vapor pressure at each of -40°C, -35°C and -30°C, the saturated liquid pressure at 55°C, the GWP and the heat of combustion were calculated for each working medium. Relative values of the saturated vapor pressure and the saturated liquid pressure of each working medium, taking the saturated vapor pressure and the saturated liquid pressure of R404A as 1.000, were also calculated. The calculation was carried out by the method described above.

In a case in which the working medium is a single medium or an azeotropic mixed medium, the saturated liquid pressure and the saturated vapor pressure at the same temperature are substantially the same. In a case in which the working medium is a non-azeotropic mixed medium, in contrast, the saturated liquid pressure and the saturated vapor pressure at the same temperature have different values.

Since the evaporation pressure is calculated by assuming the evaporation temperature to be the average temperature of the evaporation start temperature and the evaporation completion temperature (evaporation temperature = (evaporation start temperature + evaporation completion temperature)/2), the lowest evaporation pressure in the heat cycle system can be determined by the saturated vapor pressure at a temperature that is set and controlled as the evaporation temperature.

Since the condensation pressure is calculated by assuming the condensation temperature to be the average temperature of the condensation start temperature and the condensation completion temperature (condensation temperature = (condensation start temperature + condensation completion temperature)/2), the highest condensation pressure in the heat cycle system can be determined by the saturated liquid pressure at a temperature that is set and controlled as the condensation temperature.

In Tables 2 and 3, the values shown in the column of "Left-hand side value of Inequality (A1)" are values calculated by "-2.20X + 25.60", when the content of carbon dioxide is defined as X% by mass.

The values shown in the column of "Right-hand side value of Inequality (A1)" are values calculated by "-5.58X + 61.74", when the content of carbon dioxide is defined as X% by mass.

The values shown in the column of "Right-hand side value of Inequality (A3)" are values calculated by "-5.67X + 56.20", when the content of carbon dioxide is defined as X% by mass.

When the content of HFO-1123 is defined as Y% by mass, in a case in which Y is equal to or higher than the "Left-hand side value of Inequality (A1)", the letter "Y" is entered in the column for the "Left-hand side value of Inequality (A1)", whereas in a case in which Y is less than the "Left-hand side value of Inequality (A1)", the letter "N" is entered therein.

When the content of HFO-1123 is defined as Y% by mass, in a case in which Y is equal to or lower than the "Right-hand side value of Inequality (A1)", the letter "Y" is entered in the column for the "Right-hand side value of Inequality (A1)", whereas in a case in which Y is higher than the "Right-hand side value of Inequality (A1)", the letter "N" is entered therein.

When the content of HFO-1123 is defined as Y% by mass, in a case in which Y is equal to or lower than the "Right-hand side value of Inequality (A3)", the letter "Y" is entered in the column for the "Right-hand side value of Inequality (A3)", whereas in a case in which Y is higher than the "Right-hand side value of Inequality (A3)", the letter "N" is entered therein.

[Table 2]

| No. | HFO-1123 | HFO-1234yf | CO₂ | R404A | R410A | Saturated vapor pressure (MPa) −40°C | −35°C | −30°C | Saturated liquid pressure 55°C (MPa) | Saturated vapor pressure (Ratio relative to R404A) −40°C | −35°C | −30°C | Saturated liquid pressure 55°C | Left-hand side value of Inequality (A1) | Right-hand side value of Inequality (A1) (% by mass) | | Right-hand side value of Inequality (A3) | | GWP (AR6) | Heat of combustion (MJ/kg) |
|---|---|---|---|---|---|---|---|---|---|---|---|---|---|---|---|---|---|---|---|---|
| | (% by mass) | | | | | | | | | | | | | | | | | | | |
| 1 | - | - | - | 100.0 | - | 0.131 | 0.164 | 0.202 | 2.585 | 1.000 | 1.000 | 1.000 | 1.000 | - | - | | - | | 4728 | 7.423 |
| 2 | - | - | - | - | 100.0 | 0.175 | 0.218 | 0.269 | 3.439 | 1.335 | 1.333 | 1.332 | 1.330 | - | - | | - | | 2256 | 6.634 |
| 3 | 100.0 | 0.0 | 0.0 | - | - | 0.270 | 0.331 | 0.401 | 4.208 | 2.064 | 2.022 | 1.984 | 1.628 | - | - | | - | | 0.005 | 9.929 |
| 4 | 0.0 | 100.0 | 0.0 | - | - | 0.062 | 0.079 | 0.099 | 1.465 | 0.476 | 0.483 | 0.490 | 0.567 | - | - | | - | | 0.501 | 10.731 |
| 5 | 55.0 | 43.0 | 2.0 | - | - | 0.128 | 0.160 | 0.199 | 3.259 | 0.975 | 0.980 | 0.985 | 1.261 | 21.20 Y | 50.58 N | | 44.86 N | | <1 | 10.075 |
| 6 | 15.0 | 82.5 | 2.5 | - | - | 0.078 | 0.099 | 0.124 | 2.298 | 0.599 | 0.607 | 0.615 | 0.889 | 20.10 N | 47.79 Y | | 42.03 Y | | <1 | 10.343 |
| 7 | 8.0 | 86.0 | 6.0 | - | - | 0.079 | 0.100 | 0.126 | 2.655 | 0.605 | 0.613 | 0.621 | 1.027 | 12.40 N | 28.26 Y | | 22.18 N | | <1 | 10.023 |
| 8 | 40.0 | 54.0 | 6.0 | - | - | 0.116 | 0.146 | 0.183 | 3.432 | 0.888 | 0.895 | 0.903 | 1.328 | 12.40 Y | 28.26 N | | 22.18 N | | <1 | 9.767 |
| 9 | 20.0 | 70.0 | 10.0 | - | - | 0.100 | 0.127 | 0.159 | 3.454 | 0.767 | 0.776 | 0.785 | 1.336 | 3.60 Y | 5.94 N | | -0.50 N | | <1 | 9.498 |
| 10 | 20.1 | 77.4 | 2.5 | - | - | 0.083 | 0.105 | 0.132 | 2.428 | 0.635 | 0.643 | 0.651 | 0.939 | 20.10 Y | 47.79 Y | | 42.03 Y | | <1 | 10.302 |
| 11 | 19.0 | 78.0 | 3.0 | - | - | 0.083 | 0.105 | 0.132 | 2.478 | 0.635 | 0.643 | 0.651 | 0.959 | 19.00 Y | 45.00 Y | | 39.19 Y | | <1 | 10.257 |
| 12 | 16.8 | 79.2 | 4.0 | - | - | 0.083 | 0.105 | 0.132 | 2.576 | 0.635 | 0.643 | 0.651 | 0.996 | 16.80 Y | 39.42 Y | | 33.52 Y | | <1 | 10.167 |
| 13 | 14.6 | 80.4 | 5.0 | - | - | 0.083 | 0.105 | 0.132 | 2.669 | 0.635 | 0.644 | 0.652 | 1.033 | 14.60 Y | 33.84 Y | | 27.85 Y | | <1 | 10.078 |
| 14 | 12.4 | 81.6 | 6.0 | - | - | 0.083 | 0.105 | 0.132 | 2.759 | 0.635 | 0.644 | 0.652 | 1.067 | 12.40 Y | 28.26 Y | | 22.18 Y | | <1 | 9.988 |
| 15 | 20.0 | 76.0 | 4.0 | - | - | 0.086 | 0.109 | 0.137 | 2.655 | 0.659 | 0.667 | 0.675 | 1.027 | 16.80 Y | 39.42 Y | | 33.52 Y | | <1 | 10.142 |
| 16 | 20.0 | 75.0 | 5.0 | - | - | 0.089 | 0.112 | 0.140 | 2.801 | 0.676 | 0.685 | 0.693 | 1.084 | 14.60 Y | 33.84 Y | | 27.85 Y | | <1 | 10.034 |
| 17 | 20.0 | 74.0 | 6.0 | - | - | 0.091 | 0.115 | 0.144 | 2.941 | 0.694 | 0.702 | 0.710 | 1.138 | 12.40 Y | 28.26 Y | | 22.18 Y | | <1 | 9.927 |
| 18 | 25.0 | 72.5 | 2.5 | - | - | 0.088 | 0.111 | 0.139 | 2.553 | 0.673 | 0.681 | 0.688 | 0.988 | 20.10 Y | 47.79 Y | | 42.03 Y | | <1 | 10.263 |
| 19 | 25.0 | 72.0 | 3.0 | - | - | 0.089 | 0.113 | 0.141 | 2.631 | 0.682 | 0.690 | 0.697 | 1.018 | 19.00 Y | 45.00 Y | | 39.19 Y | | <1 | 10.209 |
| 20 | 25.0 | 71.0 | 4.0 | - | - | 0.092 | 0.116 | 0.145 | 2.780 | 0.699 | 0.707 | 0.715 | 1.075 | 16.80 Y | 39.42 Y | | 33.52 Y | | <1 | 10.102 |
| 21 | 25.0 | 70.0 | 5.0 | - | - | 0.094 | 0.119 | 0.148 | 2.924 | 0.718 | 0.726 | 0.734 | 1.131 | 14.60 Y | 33.84 Y | | 27.85 Y | | <1 | 9.994 |
| 22 | 28.0 | 69.5 | 2.5 | - | - | 0.091 | 0.115 | 0.144 | 2.630 | 0.698 | 0.705 | 0.713 | 1.018 | 20.10 Y | 47.79 Y | | 42.03 Y | | <1 | 10.238 |
| 23 | 28.0 | 69.0 | 3.0 | - | - | 0.093 | 0.117 | 0.146 | 2.707 | 0.707 | 0.714 | 0.722 | 1.047 | 19.00 Y | 45.00 Y | | 39.19 Y | | <1 | 10.185 |
| 24 | 28.0 | 68.0 | 4.0 | - | - | 0.095 | 0.120 | 0.150 | 2.855 | 0.725 | 0.733 | 0.741 | 1.105 | 16.80 Y | 39.42 Y | | 33.52 Y | | <1 | 10.077 |
| 25 | 30.0 | 67.5 | 2.5 | - | - | 0.094 | 0.118 | 0.148 | 2.682 | 0.715 | 0.722 | 0.730 | 1.037 | 20.10 Y | 47.79 Y | | 42.03 Y | | <1 | 10.222 |
| 26 | 30.0 | 67.0 | 3.0 | - | - | 0.095 | 0.120 | 0.149 | 2.758 | 0.724 | 0.732 | 0.739 | 1.067 | 19.00 Y | 45.00 Y | | 39.19 Y | | <1 | 10.169 |
| 27 | 30.0 | 66.0 | 4.0 | - | - | 0.097 | 0.123 | 0.153 | 2.906 | 0.743 | 0.751 | 0.758 | 1.124 | 16.80 Y | 39.42 Y | | 33.52 N | | <1 | 10.061 |
| 28 | 30.0 | 65.0 | 5.0 | - | - | 0.100 | 0.126 | 0.157 | 3.048 | 0.762 | 0.770 | 0.778 | 1.179 | 14.60 Y | 33.84 Y | | 27.85 Y | | <1 | 9.954 |
| 29 | 32.0 | 65.0 | 3.0 | - | - | 0.097 | 0.123 | 0.153 | 2.809 | 0.742 | 0.749 | 0.757 | 1.087 | 19.00 Y | 45.00 Y | | 39.19 Y | | <1 | 10.153 |

[Table 3]

| | HFO-1123 | HFO-1234yf | CO₂ | R404A | R410A | Saturated vapor pressure (MPa) -40°C | -35°C | -30°C | Saturated liquid pressure 55°C | Saturated vapor pressure (Ratio relative to R404A) -40°C | -35°C | -30°C | Saturated liquid pressure 55°C | Left-hand side value of Inequality (A1) | Right-hand side value of Inequality (A1) (% by mass) | | Right-hand side value of Inequality (A3) | | GWP (AR6) | Heat of combustion (MJ/kg) |
|---|---|---|---|---|---|---|---|---|---|---|---|---|---|---|---|---|---|---|---|---|
| | (% by mass) | | | | | (MPa) | | | | (Ratio relative to R404A) | | | | | (% by mass) | | | | | |
| 30 | 32.0 | 64.0 | 4.0 | - | - | 0.100 | 0.126 | 0.157 | 2.956 | 0.761 | 0.769 | 0.777 | 1.144 | 16.80 | Y | 39.42 | Y | 33.52 | < 1 | 10.045 |
| 31 | 32.0 | 63.0 | 5.0 | - | - | 0.102 | 0.129 | 0.161 | 3.098 | 0.781 | 0.789 | 0.797 | 1.198 | 14.60 | Y | 33.84 | N | 27.85 | < 1 | 9.938 |
| 32 | 34.0 | 63.0 | 3.0 | - | - | 0.100 | 0.126 | 0.157 | 2.860 | 0.760 | 0.768 | 0.775 | 1.106 | 19.00 | Y | 45.00 | Y | 39.19 | < 1 | 10.137 |
| 33 | 34.0 | 62.0 | 4.0 | - | - | 0.102 | 0.129 | 0.161 | 3.007 | 0.780 | 0.788 | 0.796 | 1.163 | 16.80 | Y | 39.42 | N | 33.52 | < 1 | 10.029 |
| 34 | 36.0 | 61.0 | 3.0 | - | - | 0.102 | 0.129 | 0.161 | 2.912 | 0.779 | 0.787 | 0.794 | 1.126 | 19.00 | Y | 45.00 | Y | 39.19 | < 1 | 10.121 |
| 35 | 36.0 | 60.0 | 4.0 | - | - | 0.105 | 0.132 | 0.165 | 3.057 | 0.800 | 0.808 | 0.815 | 1.183 | 16.80 | Y | 39.42 | N | 33.52 | < 1 | 10.013 |
| 36 | 42.0 | 55.5 | 2.5 | - | - | 0.109 | 0.137 | 0.171 | 2.992 | 0.830 | 0.837 | 0.844 | 1.158 | 20.10 | Y | 47.79 | Y | 42.03 | < 1 | 10.126 |
| 37 | 39.1 | 57.9 | 3.0 | - | - | 0.106 | 0.134 | 0.167 | 2.992 | 0.810 | 0.818 | 0.825 | 1.157 | 19.00 | Y | 45.00 | Y | 39.19 | < 1 | 10.096 |
| 38 | 33.5 | 62.5 | 4.0 | - | - | 0.102 | 0.128 | 0.160 | 2.994 | 0.776 | 0.783 | 0.791 | 1.158 | 16.80 | Y | 39.42 | Y | 33.52 | < 1 | 10.033 |
| 39 | 27.8 | 67.2 | 5.0 | - | - | 0.097 | 0.123 | 0.153 | 2.993 | 0.742 | 0.750 | 0.758 | 1.158 | 14.60 | Y | 33.84 | Y | 27.85 | < 1 | 9.972 |
| 40 | 22.1 | 71.9 | 6.0 | - | - | 0.093 | 0.118 | 0.147 | 2.992 | 0.711 | 0.719 | 0.728 | 1.157 | 12.40 | Y | 28.26 | Y | 22.18 | < 1 | 9.910 |
| 41 | 47.7 | 49.8 | 2.5 | - | - | 0.117 | 0.147 | 0.183 | 3.141 | 0.894 | 0.901 | 0.907 | 1.215 | 20.10 | Y | 47.79 | N | 42.03 | < 1 | 10.080 |
| 42 | 45.0 | 52.0 | 3.0 | - | - | 0.115 | 0.144 | 0.180 | 3.144 | 0.875 | 0.881 | 0.888 | 1.216 | 19.00 | Y | 45.00 | N | 39.19 | < 1 | 10.048 |
| 43 | 39.4 | 56.6 | 4.0 | - | - | 0.109 | 0.138 | 0.172 | 3.144 | 0.835 | 0.843 | 0.850 | 1.216 | 16.80 | Y | 39.42 | N | 33.52 | < 1 | 9.986 |
| 44 | 33.8 | 61.2 | 5.0 | - | - | 0.105 | 0.132 | 0.165 | 3.143 | 0.799 | 0.807 | 0.815 | 1.216 | 14.60 | Y | 33.84 | N | 27.85 | < 1 | 9.924 |
| 45 | 28.2 | 65.8 | 6.0 | - | - | 0.100 | 0.127 | 0.158 | 3.141 | 0.765 | 0.773 | 0.782 | 1.215 | 12.40 | Y | 28.26 | N | 22.18 | < 1 | 9.861 |

As shown in Tables 2 and 3, Examples 10 to 45, in each of which the working medium contains HFO-1123, HFO-1234yf, and carbon dioxide; X and Y satisfy Inequalities (A1) and (A2), wherein the content of carbon dioxide with respect to the total content of HFO-1123, HFO-1234yf and carbon dioxide is defined as X% by mass, and the content of HFO-1123 with respect to the total content of HFO-1123, HFO-1234yf and carbon dioxide is defined as Y% by mass; and the total content of HFO-1123, HFO-1234yf and carbon dioxide is 99.0% by mass or more with respect to the total amount of the working medium, had a saturated vapor pressure at -40°C of 0.082 MPa or greater, a saturated vapor pressure at -35°C of 0.104 MPa or greater, and a saturated vapor pressure at -30°C of 0.130 MPa or greater. Further, the saturated liquid pressure at 55°C was 3.150 MPa or less. Therefore, it is believed that the working media of Examples 10 to 45 can be suitably used as a substitute for R404A. In addition, the working media of Examples 10 to 45 have a saturated liquid pressure at 55°C of equal to or lower than the saturated liquid pressure at 55°C of R410A. Therefore, it is believed that the working media of Examples 10 to 45 can be suitably used as a substitute for R410A.

In particular, Examples 10 to 27, 29 to 30, 32, 34 and 36 to 40, in which X and Y satisfy Inequalities (A1), (A2) and (A3), had a saturated vapor pressure at 55°C of 3.000 MPa or less.

Further, the working media of Examples 10 to 45 contain a suitable amount of carbon dioxide, whereby the heat of combustion is suppressed to 10.310 MJ/kg or less.

In Examples 6 and 7, in contrast, the content of HFO-1123 in the working medium is lower than the left-hand side value of Inequality (A1). Therefore, the saturated vapor pressure at -40°C was less than 0.082 MPa, the saturated vapor pressure at -35°C was less than 0.104 MPa, and the saturated vapor pressure at -30°C was less than 0.130 MPa.

In Examples 5, 8 and 9, the content of HFO-1123 is higher than the right-hand side value of Inequality (A1), whereby the saturated vapor pressure at 55°C was higher than 3.150 MPa.

For each of the working media of Examples 1, 5 to 10, 12, 14 to 36, 38, 40, 42, 43 and 45 (Condition 1 or 2), or the working media of Examples 1, 2, 5 to 10, 12, 14 to 36, 38, 40, 42, 43 and 45 (Condition 3 or 4), the state of the refrigeration cycle, under the following conditions of the condensation temperature, the evaporation temperature, the degree of superheating (SH), the degree of subcooling (SC) and the compressor efficiency, were calculated based on the calculation of theoretical refrigeration cycle performance, and the discharge temperature (shown as "Td" in the tables), the condensation pressure (shown as "Pc" in the tables), the evaporation pressure (shown as "Pe" in the tables), the refrigeration effect (shown as "Wr" in the tables), the coefficient of performance (shown as "COP" in the tables), and the capacity per unit volume (shown as "CAP" in the tables) were calculated. The methods for measuring the Td, Pc, Pe, Wr, COP and CAP are as described above. The results are shown in Tables 4 to 7.

In Tables 4 to 7, the Pc, Pe, Wr, COP and CAP were evaluated as relative values based on the values of R404A (R404A = 1.000).

(Conditions in Table 4: Condition 1)

· Condensation temperature: 40°C
· Evaporation temperature: -40°C
· Degree of superheating (SH): 20°C
· Degree of subcooling (SC): 0°C
· Compressor efficiency: 0.7

(Conditions in Table 5: Condition 2)

· Condensation temperature: 40°C
· Evaporation temperature: -20°C
· Degree of superheating (SH): 20°C
· Degree of subcooling (SC): 0°C
· Compressor efficiency: 0.7

(Conditions in Table 6: Condition 3)

· Condensation temperature: 40°C
· Evaporation temperature: 0°C
· Degree of superheating (SH): 20°C
· Degree of subcooling (SC): 0°C
· Compressor efficiency: 0.7

(Conditions in Table 7: Condition 4)

· Condensation temperature: 40°C
· Evaporation temperature: 15°C
· Degree of superheating (SH): 20°C
· Degree of subcooling (SC): 0°C
· Compressor efficiency: 0.7

[Table 4]

| Example | R1123 | R1234yf | CO$_2$ | R404A | Td | Pc | Pe | Wr | COP | CAP |
|---|---|---|---|---|---|---|---|---|---|---|
| | (% by mass) | | | | °C | (Ratio relative to R404A) | | | | |
| 1 | - | - | - | 100.0 | 92.6 | 1.000 | 1.000 | 1.000 | 1.000 | 1.000 |
| 5 | 55.0 | 43.0 | 2.0 | - | 106.4 | 1.184 | 1.098 | 1.142 | 1.005 | 1.155 |
| 6 | 15.0 | 82.5 | 2.5 | - | 94.2 | 0.813 | 0.636 | 1.104 | 1.046 | 0.733 |
| 7 | 8.0 | 86.0 | 6.0 | - | 100.6 | 0.908 | 0.658 | 1.167 | 1.041 | 0.779 |
| 8 | 40.0 | 54.0 | 6.0 | - | 110.8 | 1.210 | 1.029 | 1.191 | 1.003 | 1.120 |
| 9 | 20.0 | 70.0 | 10.0 | - | 113.0 | 1.178 | 0.909 | 1.234 | 1.008 | 1.032 |
| 10 | 20.1 | 77.4 | 2.5 | - | 96.2 | 0.859 | 0.685 | 1.114 | 1.042 | 0.781 |
| 12 | 16.8 | 79.2 | 4.0 | - | 98.9 | 0.898 | 0.691 | 1.140 | 1.040 | 0.798 |
| 14 | 12.4 | 81.6 | 6.0 | - | 102.1 | 0.946 | 0.704 | 1.173 | 1.038 | 0.824 |
| 15 | 20.0 | 76.0 | 4.0 | - | 100.0 | 0.927 | 0.724 | 1.146 | 1.037 | 0.831 |
| 16 | 20.0 | 75.0 | 5.0 | - | 102.5 | 0.971 | 0.750 | 1.164 | 1.032 | 0.862 |
| 17 | 20.0 | 74.0 | 6.0 | - | 104.8 | 1.014 | 0.779 | 1.180 | 1.027 | 0.895 |
| 18 | 25.0 | 72.5 | 2.5 | - | 98.1 | 0.904 | 0.733 | 1.123 | 1.037 | 0.828 |
| 19 | 25.0 | 72.0 | 3.0 | - | 99.4 | 0.928 | 0.747 | 1.133 | 1.035 | 0.846 |
| 20 | 25.0 | 71.0 | 4.0 | - | 101.8 | 0.973 | 0.776 | 1.152 | 1.030 | 0.880 |
| 21 | 25.0 | 70.0 | 5.0 | - | 104.2 | 1.018 | 0.805 | 1.169 | 1.026 | 0.914 |
| 22 | 28.0 | 69.5 | 2.5 | - | 99.2 | 0.932 | 0.764 | 1.128 | 1.034 | 0.859 |
| 23 | 28.0 | 69.0 | 3.0 | - | 100.4 | 0.955 | 0.780 | 1.138 | 1.032 | 0.877 |
| 24 | 28.0 | 68.0 | 4.0 | - | 102.8 | 1.001 | 0.809 | 1.156 | 1.028 | 0.911 |
| 25 | 30.0 | 67.5 | 2.5 | - | 99.9 | 0.951 | 0.786 | 1.131 | 1.032 | 0.880 |
| 26 | 30.0 | 67.0 | 3.0 | - | 101.1 | 0.975 | 0.801 | 1.140 | 1.030 | 0.898 |
| 27 | 30.0 | 66.0 | 4.0 | - | 103.5 | 1.020 | 0.831 | 1.158 | 1.025 | 0.933 |
| 28 | 30.0 | 65.0 | 5.0 | - | 105.8 | 1.065 | 0.863 | 1.174 | 1.020 | 0.968 |
| 29 | 32.0 | 65.0 | 3.0 | - | 101.8 | 0.994 | 0.824 | 1.143 | 1.028 | 0.919 |
| 30 | 32.0 | 64.0 | 4.0 | - | 104.2 | 1.040 | 0.856 | 1.160 | 1.023 | 0.955 |
| 31 | 32.0 | 63.0 | 5.0 | - | 106.4 | 1.085 | 0.888 | 1.175 | 1.018 | 0.990 |
| 32 | 34.0 | 63.0 | 3.0 | - | 102.5 | 1.013 | 0.847 | 1.145 | 1.025 | 0.941 |
| 33 | 34.0 | 62.0 | 4.0 | - | 104.8 | 1.059 | 0.881 | 1.162 | 1.021 | 0.978 |
| 34 | 36.0 | 61.0 | 3.0 | - | 103.1 | 1.033 | 0.872 | 1.147 | 1.024 | 0.963 |
| 35 | 36.0 | 60.0 | 4.0 | - | 105.4 | 1.079 | 0.905 | 1.163 | 1.019 | 1.000 |
| 36 | 42.0 | 55.5 | 2.5 | - | 103.9 | 1.070 | 0.931 | 1.144 | 1.019 | 1.014 |
| 38 | 33.5 | 62.5 | 4.0 | - | 104.6 | 1.054 | 0.874 | 1.161 | 1.021 | 0.971 |
| 40 | 22.1 | 71.9 | 6.0 | - | 105.5 | 1.033 | 0.803 | 1.182 | 1.024 | 0.917 |

(continued)

| Example | R1123 | R1234yf | $CO_2$ | R404A | Td | Pc | Pe | Wr | COP | CAP |
|---|---|---|---|---|---|---|---|---|---|---|
| | (% by mass) | | | | °C | (Ratio relative to R404A) | | | | |
| 42 | 45.0 | 52.0 | 3.0 | - | 105.9 | 1.125 | 0.989 | 1.154 | 1.013 | 1.069 |
| 43 | 39.4 | 56.6 | 4.0 | - | 106.4 | 1.113 | 0.949 | 1.165 | 1.014 | 1.039 |
| 45 | 28.2 | 65.8 | 6.0 | - | 107.4 | 1.091 | 0.875 | 1.187 | 1.019 | 0.984 |

[Table 5]

| Example | R1123 | R1234yf | $CO_2$ | R404A | Td | Pc | Pe | Wr | COP | CAP |
|---|---|---|---|---|---|---|---|---|---|---|
| | (% by mass) | | | | °C | (Ratio relative to R404A) | | | | |
| 1 | - | - | - | 100.0 | 80.5 | 1.000 | 1.000 | 1.000 | 1.000 | 1.000 |
| 5 | 55.0 | 43.0 | 2.0 | - | 91.6 | 1.184 | 1.121 | 1.131 | 0.995 | 1.165 |
| 6 | 15.0 | 82.5 | 2.5 | - | 83.0 | 0.813 | 0.679 | 1.107 | 1.034 | 0.776 |
| 7 | 8.0 | 86.0 | 6.0 | - | 88.6 | 0.908 | 0.713 | 1.166 | 1.022 | 0.834 |
| 8 | 40.0 | 54.0 | 6.0 | - | 95.4 | 1.210 | 1.076 | 1.179 | 0.990 | 1.153 |
| 9 | 20.0 | 70.0 | 10.0 | - | 97.8 | 1.178 | 0.975 | 1.223 | 0.992 | 1.088 |
| 10 | 20.1 | 77.4 | 2.5 | - | 84.5 | 0.859 | 0.729 | 1.115 | 1.032 | 0.826 |
| 12 | 16.8 | 79.2 | 4.0 | - | 86.9 | 0.898 | 0.740 | 1.140 | 1.024 | 0.846 |
| 14 | 12.4 | 81.6 | 6.0 | - | 89.7 | 0.946 | 0.757 | 1.170 | 1.018 | 0.875 |
| 15 | 20.0 | 76.0 | 4.0 | - | 87.7 | 0.927 | 0.772 | 1.143 | 1.022 | 0.876 |
| 16 | 20.0 | 75.0 | 5.0 | - | 89.6 | 0.971 | 0.803 | 1.160 | 1.016 | 0.912 |
| 17 | 20.0 | 74.0 | 6.0 | - | 91.5 | 1.014 | 0.836 | 1.175 | 1.011 | 0.948 |
| 18 | 25.0 | 72.5 | 2.5 | - | 85.9 | 0.904 | 0.777 | 1.122 | 1.025 | 0.870 |
| 19 | 25.0 | 72.0 | 3.0 | - | 86.9 | 0.928 | 0.792 | 1.132 | 1.023 | 0.888 |
| 20 | 25.0 | 71.0 | 4.0 | - | 88.9 | 0.973 | 0.824 | 1.148 | 1.017 | 0.925 |
| 21 | 25.0 | 70.0 | 5.0 | - | 90.8 | 1.018 | 0.857 | 1.164 | 1.012 | 0.961 |
| 22 | 28.0 | 69.5 | 2.5 | - | 86.7 | 0.932 | 0.808 | 1.125 | 1.023 | 0.899 |
| 23 | 28.0 | 69.0 | 3.0 | - | 87.7 | 0.956 | 0.824 | 1.134 | 1.020 | 0.918 |
| 24 | 28.0 | 68.0 | 4.0 | - | 89.6 | 1.001 | 0.857 | 1.151 | 1.014 | 0.955 |
| 25 | 30.0 | 67.5 | 2.5 | - | 87.2 | 0.951 | 0.829 | 1.128 | 1.021 | 0.919 |
| 26 | 30.0 | 67.0 | 3.0 | - | 88.2 | 0.975 | 0.846 | 1.136 | 1.018 | 0.937 |
| 27 | 30.0 | 66.0 | 4.0 | - | 90.1 | 1.020 | 0.879 | 1.152 | 1.012 | 0.975 |
| 28 | 30.0 | 65.0 | 5.0 | - | 91.9 | 1.065 | 0.914 | 1.167 | 1.007 | 1.011 |
| 29 | 32.0 | 65.0 | 3.0 | - | 88.7 | 0.994 | 0.868 | 1.138 | 1.016 | 0.958 |
| 30 | 32.0 | 64.0 | 4.0 | - | 90.5 | 1.040 | 0.902 | 1.154 | 1.011 | 0.995 |
| 31 | 32.0 | 63.0 | 5.0 | - | 92.3 | 1.085 | 0.938 | 1.167 | 1.005 | 1.032 |
| 32 | 34.0 | 63.0 | 3.0 | - | 89.1 | 1.013 | 0.891 | 1.140 | 1.014 | 0.978 |
| 33 | 34.0 | 62.0 | 4.0 | - | 91.0 | 1.059 | 0.926 | 1.155 | 1.008 | 1.015 |
| 34 | 36.0 | 61.0 | 3.0 | - | 89.6 | 1.033 | 0.914 | 1.141 | 1.012 | 0.999 |
| 35 | 36.0 | 60.0 | 4.0 | - | 91.4 | 1.079 | 0.950 | 1.155 | 1.006 | 1.036 |
| 36 | 42.0 | 55.5 | 2.5 | - | 90.0 | 1.070 | 0.968 | 1.137 | 1.009 | 1.042 |

(continued)

| Example | R1123 | R1234yf | CO$_2$ | R404A | Td | Pc | Pe | Wr | COP | CAP |
|---------|-------|---------|--------|-------|-----|-----|-----|-----|-----|-----|
| | (% by mass) | | | | °C | (Ratio relative to R404A) | | | | |
| 38 | 33.5 | 62.5 | 4.0 | - | 90.9 | 1.054 | 0.920 | 1.155 | 1.009 | 1.010 |
| 40 | 22.1 | 71.9 | 6.0 | - | 91.9 | 1.033 | 0.859 | 1.177 | 1.010 | 0.968 |
| 42 | 45.0 | 52.0 | 3.0 | - | 91.5 | 1.125 | 1.025 | 1.144 | 1.002 | 1.093 |
| 43 | 39.4 | 56.6 | 4.0 | - | 92.1 | 1.113 | 0.991 | 1.156 | 1.003 | 1.072 |
| 45 | 28.2 | 65.8 | 6.0 | - | 93.2 | 1.091 | 0.928 | 1.179 | 1.004 | 1.029 |

[Table 6]

| Example | R1123 | R1234yf | CO$_2$ | R404A | R410A | Td | Pc | Pe | Wr | COP | CAP |
|---------|-------|---------|--------|-------|-------|-----|-----|-----|-----|-----|-----|
| | (% by mass) | | | | | °C | (Ratio relative to R404A) | | | | |
| 1 | - | - | - | 100.0 | - | 71.9 | 1.000 | 1.000 | 1.000 | 1.000 | 1.000 |
| 2 | - | - | - | - | 100.0 | 90.2 | 1.329 | 1.323 | 1.400 | 1.000 | 1.388 |
| 5 | 55.0 | 43.0 | 2.0 | - | - | 80.8 | 1.184 | 1.142 | 1.123 | 0.987 | 1.174 |
| 6 | 15.0 | 82.5 | 2.5 | - | - | 75.5 | 0.813 | 0.721 | 1.115 | 1.022 | 0.820 |
| 7 | 8.0 | 86.0 | 6.0 | - | - | 80.3 | 0.908 | 0.773 | 1.172 | 1.007 | 0.896 |
| 8 | 40.0 | 54.0 | 6.0 | - | - | 84.3 | 1.210 | 1.120 | 1.171 | 0.980 | 1.186 |
| 9 | 20.0 | 70.0 | 10.0 | - | - | 86.8 | 1.178 | 1.046 | 1.219 | 0.984 | 1.152 |
| 10 | 20.1 | 77.4 | 2.5 | - | - | 76.5 | 0.859 | 0.770 | 1.121 | 1.019 | 0.866 |
| 12 | 16.8 | 79.2 | 4.0 | - | - | 78.6 | 0.898 | 0.789 | 1.145 | 1.011 | 0.896 |
| 14 | 12.4 | 81.6 | 6.0 | - | - | 81.0 | 0.946 | 0.816 | 1.173 | 1.004 | 0.935 |
| 15 | 20.0 | 76.0 | 4.0 | - | - | 79.1 | 0.927 | 0.821 | 1.147 | 1.010 | 0.924 |
| 16 | 20.0 | 75.0 | 5.0 | - | - | 80.7 | 0.971 | 0.857 | 1.162 | 1.004 | 0.964 |
| 17 | 20.0 | 74.0 | 6.0 | - | - | 82.1 | 1.014 | 0.894 | 1.176 | 1.000 | 1.002 |
| 18 | 25.0 | 72.5 | 2.5 | - | - | 77.4 | 0.904 | 0.818 | 1.126 | 1.016 | 0.910 |
| 19 | 25.0 | 72.0 | 3.0 | - | - | 78.3 | 0.928 | 0.836 | 1.134 | 1.012 | 0.930 |
| 20 | 25.0 | 71.0 | 4.0 | - | - | 79.9 | 0.973 | 0.872 | 1.150 | 1.006 | 0.970 |
| 21 | 25.0 | 70.0 | 5.0 | - | - | 81.4 | 1.018 | 0.909 | 1.164 | 1.001 | 1.009 |
| 22 | 28.0 | 69.5 | 2.5 | - | - | 78.0 | 0.932 | 0.849 | 1.128 | 1.013 | 0.938 |
| 23 | 28.0 | 69.0 | 3.0 | - | - | 78.8 | 0.956 | 0.867 | 1.136 | 1.010 | 0.958 |
| 24 | 28.0 | 68.0 | 4.0 | - | - | 80.3 | 1.001 | 0.904 | 1.151 | 1.004 | 0.997 |
| 25 | 30.0 | 67.5 | 2.5 | - | - | 78.3 | 0.951 | 0.870 | 1.130 | 1.012 | 0.956 |
| 26 | 30.0 | 67.0 | 3.0 | - | - | 79.1 | 0.975 | 0.888 | 1.137 | 1.008 | 0.976 |
| 27 | 30.0 | 66.0 | 4.0 | - | - | 80.6 | 1.020 | 0.925 | 1.151 | 1.002 | 1.016 |
| 28 | 30.0 | 65.0 | 5.0 | - | - | 82.0 | 1.065 | 0.964 | 1.165 | 0.996 | 1.055 |
| 29 | 32.0 | 65.0 | 3.0 | - | - | 79.4 | 0.994 | 0.910 | 1.138 | 1.006 | 0.994 |
| 30 | 32.0 | 64.0 | 4.0 | - | - | 80.9 | 1.040 | 0.947 | 1.152 | 1.000 | 1.034 |
| 31 | 32.0 | 63.0 | 5.0 | - | - | 82.3 | 1.085 | 0.986 | 1.165 | 0.994 | 1.073 |
| 32 | 34.0 | 63.0 | 3.0 | - | - | 79.7 | 1.013 | 0.931 | 1.138 | 1.004 | 1.013 |
| 33 | 34.0 | 62.0 | 4.0 | - | - | 81.2 | 1.059 | 0.970 | 1.152 | 0.998 | 1.053 |

(continued)

| Example | R1123 | R1234yf | CO₂ | R404A | R410A | Td | Pc | Pe | Wr | COP | CAP |
|---|---|---|---|---|---|---|---|---|---|---|---|
| | | | (% by mass) | | | °C | (Ratio relative to R404A) | | | | |
| 34 | 36.0 | 61.0 | 3.0 | - | - | 80.0 | 1.033 | 0.953 | 1.139 | 1.003 | 1.032 |
| 35 | 36.0 | 60.0 | 4.0 | - | - | 81.4 | 1.079 | 0.992 | 1.152 | 0.996 | 1.071 |
| 36 | 42.0 | 55.5 | 2.5 | - | - | 80.0 | 1.070 | 1.002 | 1.133 | 0.999 | 1.069 |
| 38 | 33.5 | 62.5 | 4.0 | - | - | 81.1 | 1.054 | 0.964 | 1.152 | 0.999 | 1.048 |
| 40 | 22.1 | 71.9 | 6.0 | - | - | 82.3 | 1.033 | 0.916 | 1.177 | 0.998 | 1.021 |
| 42 | 45.0 | 52.0 | 3.0 | - | - | 81.1 | 1.125 | 1.058 | 1.138 | 0.992 | 1.117 |
| 43 | 39.4 | 56.6 | 4.0 | - | - | 81.8 | 1.113 | 1.032 | 1.152 | 0.992 | 1.103 |
| 45 | 28.2 | 65.8 | 6.0 | - | - | 83.1 | 1.091 | 0.982 | 1.176 | 0.993 | 1.077 |

[Table 7]

| Example | R1123 | R1234yf | CO₂ | R404A | R410A | Td | Pc | Pe | Wr | COP | CAP |
|---|---|---|---|---|---|---|---|---|---|---|---|
| | | | (% by mass) | | | °C | (Ratio relative to R404A) | | | | |
| 1 | - | - | - | 100.0 | - | 66.9 | 1.000 | 1.000 | 1.000 | 1.000 | 1.000 |
| 2 | - | - | - | - | 100.0 | 77.5 | 1.329 | 1.325 | 1.354 | 0.982 | 1.346 |
| 5 | 55.0 | 43.0 | 2.0 | - | - | 74.3 | 1.184 | 1.157 | 1.117 | 0.980 | 1.181 |
| 6 | 15.0 | 82.5 | 2.5 | - | - | 71.4 | 0.813 | 0.754 | 1.123 | 1.014 | 0.855 |
| 7 | 8.0 | 86.0 | 6.0 | - | - | 75.7 | 0.908 | 0.822 | 1.179 | 0.999 | 0.949 |
| 8 | 40.0 | 54.0 | 6.0 | - | - | 77.6 | 1.210 | 1.153 | 1.167 | 0.973 | 1.211 |
| 9 | 20.0 | 70.0 | 10.0 | - | - | 80.2 | 1.178 | 1.097 | 1.217 | 0.980 | 1.199 |
| 10 | 20.1 | 77.4 | 2.5 | - | - | 72.1 | 0.859 | 0.802 | 1.127 | 1.012 | 0.899 |
| 12 | 16.8 | 79.2 | 4.0 | - | - | 73.9 | 0.898 | 0.828 | 1.151 | 1.003 | 0.936 |
| 14 | 12.4 | 81.6 | 6.0 | - | - | 76.1 | 0.946 | 0.863 | 1.180 | 0.997 | 0.984 |
| 15 | 20.0 | 76.0 | 4.0 | - | - | 74.3 | 0.927 | 0.859 | 1.152 | 1.002 | 0.963 |
| 16 | 20.0 | 75.0 | 5.0 | - | - | 75.5 | 0.971 | 0.898 | 1.166 | 0.997 | 1.005 |
| 17 | 20.0 | 74.0 | 6.0 | - | - | 76.7 | 1.014 | 0.938 | 1.179 | 0.993 | 1.047 |
| 18 | 25.0 | 72.5 | 2.5 | - | - | 72.7 | 0.904 | 0.849 | 1.130 | 1.009 | 0.941 |
| 19 | 25.0 | 72.0 | 3.0 | - | - | 73.4 | 0.928 | 0.869 | 1.138 | 1.005 | 0.963 |
| 20 | 25.0 | 71.0 | 4.0 | - | - | 74.7 | 0.973 | 0.909 | 1.153 | 0.998 | 1.005 |
| 21 | 25.0 | 70.0 | 5.0 | - | - | 75.9 | 1.018 | 0.949 | 1.166 | 0.994 | 1.047 |
| 22 | 28.0 | 69.5 | 2.5 | - | - | 73.0 | 0.932 | 0.879 | 1.132 | 1.006 | 0.967 |
| 23 | 28.0 | 69.0 | 3.0 | - | - | 73.7 | 0.956 | 0.899 | 1.139 | 1.003 | 0.988 |
| 24 | 28.0 | 68.0 | 4.0 | - | - | 75.0 | 1.001 | 0.939 | 1.153 | 0.996 | 1.031 |
| 25 | 30.0 | 67.5 | 2.5 | - | - | 73.2 | 0.951 | 0.899 | 1.132 | 1.005 | 0.984 |
| 26 | 30.0 | 67.0 | 3.0 | - | - | 73.9 | 0.975 | 0.920 | 1.139 | 1.001 | 1.006 |
| 27 | 30.0 | 66.0 | 4.0 | - | - | 75.1 | 1.020 | 0.960 | 1.153 | 0.995 | 1.048 |
| 28 | 30.0 | 65.0 | 5.0 | - | - | 76.2 | 1.065 | 1.001 | 1.164 | 0.989 | 1.089 |
| 29 | 32.0 | 65.0 | 3.0 | - | - | 74.1 | 0.994 | 0.940 | 1.140 | 0.999 | 1.023 |
| 30 | 32.0 | 64.0 | 4.0 | - | - | 75.3 | 1.040 | 0.981 | 1.153 | 0.993 | 1.065 |

(continued)

| Example | R1123 | R1234yf | CO$_2$ | R404A | R410A | Td | Pc | Pe | Wr | COP | CAP |
|---------|-------|---------|--------|-------|-------|-----|-----|-----|-----|-----|-----|
| | (% by mass) | | | | | °C | (Ratio relative to R404A) | | | | |
| 31 | 32.0 | 63.0 | 5.0 | - | - | 76.4 | 1.085 | 1.022 | 1.164 | 0.987 | 1.105 |
| 32 | 34.0 | 63.0 | 3.0 | - | - | 74.2 | 1.013 | 0.961 | 1.139 | 0.998 | 1.040 |
| 33 | 34.0 | 62.0 | 4.0 | - | - | 75.4 | 1.059 | 1.002 | 1.152 | 0.991 | 1.082 |
| 34 | 36.0 | 61.0 | 3.0 | - | - | 74.4 | 1.033 | 0.983 | 1.139 | 0.996 | 1.057 |
| 35 | 36.0 | 60.0 | 4.0 | - | - | 75.5 | 1.079 | 1.024 | 1.151 | 0.989 | 1.099 |
| 36 | 42.0 | 55.5 | 2.5 | - | - | 74.2 | 1.070 | 1.027 | 1.132 | 0.993 | 1.088 |
| 38 | 33.5 | 62.5 | 4.0 | - | - | 74.2 | 1.008 | 0.956 | 1.140 | 0.998 | 1.036 |
| 40 | 22.1 | 71.9 | 6.0 | - | - | 76.8 | 1.033 | 0.959 | 1.179 | 0.992 | 1.064 |
| 42 | 45.0 | 52.0 | 3.0 | - | - | 75.0 | 1.125 | 1.082 | 1.135 | 0.986 | 1.135 |
| 43 | 39.4 | 56.6 | 4.0 | - | - | 75.7 | 1.113 | 1.061 | 1.150 | 0.985 | 1.128 |
| 45 | 28.2 | 65.8 | 6.0 | - | - | 77.1 | 1.091 | 1.023 | 1.176 | 0.986 | 1.114 |

It can be seen from Table 4 to Table 7 that, in the refrigeration cycles using the working media of Examples 10 to 45, which satisfy Inequalities (A1) and (A2), the COP relative to that of R404A tends to be 0.985 or higher, and the CAP relative to that of R404A tends to be 0.781 or higher. Further, it can be seen that the working media of Examples 10 to 45 provide better COP and CAP also compared to R410A.

Therefore, the heat cycle system according to the disclosure in which any of the working media described above is used as a substitute for R404A or R410A provides an excellent cycle performance.

The disclosure of Japanese Patent Application No. 2023-100364, filed on June 19, 2023, is incorporated herein by reference in its entirety. All publications, patent applications, and technical standards mentioned in the present specification are incorporated herein by reference to the same extent as if each individual publication, patent application, or technical standard was specifically and individually indicated to be incorporated by reference.

List of Reference Numerals

10      Refrigeration cycle system
11      Compressor
12      Condenser
13      Expansion valve
14      Evaporator
15, 16  Pump

**Claims**

1. A working medium comprising trifluoroethylene, 2,3,3,3-tetrafluoropropene, and carbon dioxide,

   wherein X and Y satisfy the following Inequalities (A1) and (A2):

$$-2.20X + 25.60 \leq Y \leq -5.58X + 61.74 \qquad (A1)$$

$$2.5 \leq X \leq 6.0 \qquad (A2),$$

   wherein a content of the carbon dioxide with respect to a total content of the trifluoroethylene, the 2,3,3,3-tetrafluoropropene and the carbon dioxide is defined as X% by mass, and a content of the trifluoroethylene with respect to the total content of the trifluoroethylene, the 2,3,3,3-tetrafluoropropene and the carbon dioxide is defined as Y% by mass, and

wherein the total content of the trifluoroethylene, the 2,3,3,3-tetrafluoropropene and the carbon dioxide is 99.0% by mass or more with respect to a total amount of the working medium.

2. The working medium according to claim 1, wherein X and Y further satisfy the following Inequality (A3):

$$-2.20X + 25.60 \leq Y \leq -5.67X + 56.20 \qquad (A3).$$

3. The working medium according to claim 1, wherein X is from 3.0 to 4.0.

4. The working medium according to claim 1, wherein Y is from 25.0 to 40.0.

5. The working medium according to claim 1, wherein the working medium has a heat of combustion of 10.310 MJ/kg or less.

6. A composition for a heat cycle system, comprising:

   the working medium according to any one of claims 1 to 5; and
   a refrigerating machine oil.

7. The composition for a heat cycle system according to claim 6, wherein the refrigerating machine oil comprises at least one selected from a group consisting of a polyalkylene glycol oil (PAG), a polyol ester oil (POE), and a polyvinyl ether oil (PVE).

8. A heat cycle system, comprising:

   the working medium according to any one of claims 1 to 5;
   a compressor configured to compress a vapor of the working medium;
   a condenser configured to cool and liquefy the vapor of the working medium discharged from the compressor;
   a decompressor configured to decompress the working medium discharged from the condenser; and
   an evaporator configured to heat the working medium discharged from the decompressor,
   wherein the evaporator controls an evaporation temperature of the working medium at -40°C or higher.

9. The heat cycle system according to claim 8, wherein the evaporator controls the evaporation temperature of the working medium at -35°C or higher.

10. The heat cycle system according to claim 8, wherein the evaporator controls the evaporation temperature of the working medium at -30°C or higher.

11. A heat cycle method, comprising:

    compressing a vapor of the working medium according to any one of claims 1 to 5;
    cooling and liquefying the vapor of the working medium;
    decompressing the liquefied working medium; and
    heating the decompressed working medium at an evaporation temperature of -40°C or higher.

12. The heat cycle method according to claim 11, wherein the heating of the decompressed working medium is carried out at an evaporation temperature of -35°C or higher.

13. The heat cycle method according to claim 11, wherein the heating of the decompressed working medium is carried out at an evaporation temperature of -30°C or higher.

# FIG. 1

# FIG. 2

# FIG. 3

Single medium or azeotropic mixed medium

# FIG. 4

**Non-azeotropic mixed medium**

## INTERNATIONAL SEARCH REPORT

| International application No. |
| --- |
| **PCT/JP2024/009110** |

**A. CLASSIFICATION OF SUBJECT MATTER**

*C09K 5/04*(2006.01)i; *C10M 105/18*(2006.01)i; *C10M 105/38*(2006.01)i; *C10M 107/24*(2006.01)i; *C10M 107/34*(2006.01)i; *F25B 1/00*(2006.01)i

FI: C09K5/04 F ZAB; C10M107/34; C10M105/18; C10M105/38; C10M107/24; F25B1/00 396Z

According to International Patent Classification (IPC) or to both national classification and IPC

**B. FIELDS SEARCHED**

Minimum documentation searched (classification system followed by classification symbols)

C09K5/04; C10M105/18; C10M105/38; C10M107/24; C10M107/34; F25B1/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2021-525823 A (ARKEMA FRANCE) 27 September 2021 (2021-09-27)<br>claims, paragraphs [0104]-[0124], etc. | 1-13 |
| A | WO 2016/194847 A1 (ASAHI GLASS COMPANY, LIMITED) 08 December 2016 (2016-12-08)<br>claims, paragraphs [0054]-[0060], [0152]-[0165], etc. | 1-13 |
| A | WO 2019/208384 A1 (DAIKIN INDUSTRIES, LTD.) 31 October 2019 (2019-10-31)<br>claims, paragraphs [0118]-[0135], etc. | 1-13 |
| A | WO 2018/047816 A1 (ASAHI GLASS COMPANY, LIMITED) 15 March 2018 (2018-03-15)<br>claims, paragraphs [0175]-[0181], etc. | 1-13 |
| A | WO 2019/240205 A1 (DAIKIN INDUSTRIES, LTD.) 19 December 2019 (2019-12-19)<br>claims, paragraphs [0097]-[0101], etc. | 1-13 |

☐ Further documents are listed in the continuation of Box C.  ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **16 April 2024** | **07 May 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/009110**

| Patent document cited in search report | | | Publication date (day/month/year) | Patent family member(s) | | | Publication date (day/month/year) |
|---|---|---|---|---|---|---|---|
| JP | 2021-525823 | A | 27 September 2021 | US claims, paragraphs [0194]-[0225], etc. WO CN | 2021/0155839 2019/234353 112400006 | A1 A1 A | |
| WO | 2016/194847 | A1 | 08 December 2016 | US claims, paragraphs [0081]-[0087], [0192]-[0196], etc. EP CN | 2018/0079941 3305869 107614652 | A1 A1 A | |
| WO | 2019/208384 | A1 | 31 October 2019 | US claims, paragraphs [0131]-[0141], etc. EP CN | 2021/0079280 3786252 112004910 | A1 A1 A | |
| WO | 2018/047816 | A1 | 15 March 2018 | US claims, paragraphs [0187]-[0189], etc. EP CN | 2019/0257553 3511392 109689831 | A1 A1 A | |
| WO | 2019/240205 | A1 | 19 December 2019 | US claims, paragraphs [0115]-[0119], etc. EP CN | 2021/0246348 3808828 112262196 | A1 A1 A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016194847 A
- US 4249412 A
- JP H10502737 A
- JP 2007511645 A
- JP 2008500437 A
- JP 2008531836 A
- JP 2023100364 A

**Non-patent literature cited in the description**

- **S. BENSON**. Thermochemical kinetics. Wiley Interscience, 1976
- **AKASAKA, R.** ; **HIGASHI, Y.** ; **SAKODA, N.** ; **FUKUDA, S.** ; **LEMMON, E.W.** Thermodynamic properties of trifluoroethene (R1123): (p, ρ, T) behavior and fundamental equation of state. *International Journal of Refrigeration.*, 2020, vol. 119, 457-467
- **AKASAKA, R.** ; **LEMMON, E. W.** A New Fundamental Equation of State for R1123 and its Applications to Mixture Models for Mixtures with R32 and R1234yf. *IIR Conference on Thermophysical Properties and Transfer Processes of Refrigerants*, 2021